# EUROPÄISCHE PATENTSCHRIFT

(11) **EP 2 454 310 B1**
(45) Veröffentlichungstag und Bekanntmachung des Hinweises auf die Patenterteilung: **05.03.2014**
(21) Anmeldenummer: 10730790.2
(22) Anmeldetag: 09.07.2010
(51) Int. Cl.: C08G 63/676, C04B 24/26, C04B 24/28, C08F 283/01, C08G 81/02

(54) **MISCHUNGEN, ENTHALTEND VERZWEIGTE OLIGOMERE ODER POLYMERE VERBINDUNGEN, IHRE HERSTELLUNG UND VERWENDUNG**
MIXTURES COMPRISING BRANCHED OLIGOMER OR POLYMER COMPOUNDS, THE PRODUCTION AND USE THEREOF
MÉLANGES CONTENANT DES COMPOSÉS OLIGOMÈRES OU POLYMÈRES RAMIFIÉS, LEUR PRÉPARATION ET LEUR UTILISATION

(30) Priorität: 15.07.2009 EP 09165572
(43) Veröffentlichungstag der Anmeldung: 23.05.2012
(73) Patentinhaber: BASF SE, 67056 Ludwigshafen (DE)
(72) Erfinder: HERTH, Gregor, 83308 Trostberg (DE); HABERECHT, Monika, 67063 Ludwigshafen (DE); FOGEL, Yulia, 83278 Traunstein (DE); LOPEZ VILLANUEVA, Francisco Javier, 68199 Mannheim (DE); BRUCHMANN, Bernd, 67251 Freinsheim (DE)
(86) Internationale Anmeldenummer: PCT/EP2010/059847
(87) Internationale Veröffentlichungsnummer: WO 2011/006837

(56) Entgegenhaltungen:
- EP-A1- 0 144 703
- EP-A2- 0 310 972
- EP-A2- 0 425 947
- WO-A1-00/18820
- CH-A5- 629 232
- DE-A1- 19 539 250
- JP-A- 10 101 392

## Beschreibung

Die vorliegende Erfindung betrifft Mischungen, enthaltend
(A) mindestens ein hydraulisches oder latent hydraulisches Bindemittel,
(B) mindestens ein Copolymer, erhältlich durch Umsetzung von
   (α1) mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, oder
   (α2) mindestens einem (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, mit
   (β) mindestens einer oligomeren oder polymeren Verbindung, erhältlich durch Umsetzung von
      (a) mindestens einer ethylenisch ungesättigten Di- oder Polycarbonsäure oder ihrem Anhydrid oder Ester mit
      (b) mindestens einem mindestens trifunktionellen Alkohol und
      (c) mindestens einer Verbindung der allgemeinen Formel I 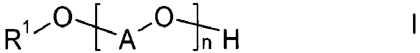 in der die Variablen wie folgt definiert sind:
         R¹ ist gewählt aus C₁-C₄-Alkyl,
         A ist gleich oder verschieden und gewählt aus C₂-C₆-Alkylen,
         n liegt im Bereich von 4 bis 40, und
      (d) gegebenenfalls mindestens einer weiteren Verbindung mit mindestens einer COOH-Gruppe oder mindestens einer alkoholischen OH-Gruppe pro Molekul.

Weiterhin betrifft die vorliegende Erfindung Verfahren zur Herstellung von erfindungsgemäßen Mischungen und ihre Verwendung.

Weiterhin betrifft die vorliegende Erfindung oligomere oder polymere Verbindungen (β'), erhältlich durch Umsetzung von
(a) mindestens einer ethylenisch ungesättigten Di- oder Polycarbonsäure oder ihrem Anhydrid oder Ester mit
(b) mindestens einem mindestens trifunktionellen Alkohol und
(c) mindestens einer Verbindung der allgemeinen Formel I 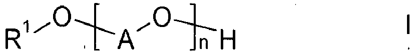 in der die Variablen wie folgt definiert sind:
   R¹ ist gewählt aus C₁-C₄-Alkyl,
   A ist gleich oder verschieden und gewählt aus C₂-C₆-Alkylen,
   n liegt im Bereich von 4 bis 40,
(d) gegebenenfalls mindestens eine weitere Verbindung mit mindestens einer COOH-Gruppe oder mindestens einer alkoholischen OH-Gruppe pro Molekül,
wobei mindestens trifunktioneller Alkohol (b) gewählt wird aus C₃-C₈-Triolen, die mit Alkylenoxid (e) alkoxyliert sein können, wobei Alkylenoxid (e) gewählt wird aus C₃-C₆-Alkylenoxid,
und ein Verfahren zur Herstellung von erfindungsgemäßen polymeren oder oligomeren Verbindungen (β'). Weiterhin betrifft die vorliegende Erfindung Copolymere (B).

Zahlreiche Mischungen lassen sich als Baustoffe einsetzen. Dazu werden Wasser und hydraulische oder latent hydraulische Bindemittel mit einem oder mehreren Hilfsmitteln versetzt, die beispielsweise die Fließfähigkeit oder die zeitabhängigen Wasser absorbierenden Eigenschaften verbessern. Als Hilfsmittel kann man organische Polymere wie beispielsweise Polyacrylate einsetzen. Es wurde auch bereits vorgeschlagen, superabsorbierende Polymere (Superabsorber) einzusetzen, die aus anderen Anwendungen wie beispielsweise Windeln bekannt sind.

Unter Superabsorbern versteht man in der Regel vernetzte, hochmolekulare, anionische oder kationische Polyelektrolyte, welche durch radikalische Polymerisation geeigneter ethylenisch ungesättigter Vinylverbindungen und anschließende Trocknungsmaßnahmen der erhaltenen Copolymere erhältlich sind. Bei Kontakt mit Wasser oder wässrigen Systemen bildet sich unter Quellen und Wasseraufnahme ein Hydrogel aus, wobei ein Vielfaches des Gewichts des pulverförmigen Copolymers aufgenommen werden kann. Unter Hydrogelen versteht man Wasser enthaltende Gele auf der Basis hydrophiler, aber wasserunlöslicher Polymere, die vernetzt sind und somit als dreidimensionale Netzwerke vorliegen.

Superabsorber, die man in Hygieneprodukten wie beispielsweise Windeln anwendet, sollen möglichst schnell Feuchtigkeit aufnehmen, andernfalls würden sie "auslaufen" und die gewünschte Wirkung träte nicht ein.

Für die Anwendungen im bauchemischen Sektor und insbesondere in Trockenmörteln und Beton bedeutet dies aber, dass bereits während der Anmachphase (Einmischen des Trockenmörtels in Wasser) die volle Aufnahmekapazität des superabsorbierenden Polymeren erreicht würde, was in vielen Fällen unerwünscht ist; das Anmachwasser steht so für die Einstellung der Konsistenz (Rheologie) nicht mehr zur Verfügung. Es gibt einige Anwendungen für Trockenmörtel (z.B. als Fugenmörtel) oder Betone (Herstellung von Betonfertigteilen), bei denen nach deren Einbringung in die Fuge oder in die Form des Fertigteils ein sprunghafter Anstieg der Viskosität gewünscht wird (im Folgenden Rheologie-Sprung genannt). Der Fugenmörtel soll dabei leicht in die Fuge einzubringen sein, während er schließlich in der Fuge steif und formstabil sein soll. Ein Beton für die Fertigteil-Industrie soll leicht in die Form einzubringen sein, dann aber möglichst schnell eine feste Konsistenz aufweisen, damit man zügig ausschalen kann.

Generell hängt die Viskosität eines mit Wasser angesetzten Baustoffes vom Wassergehalt der Zementmatrix ab. Der Wassergehalt wird durch den Wasser/Zementwert beschrieben. Je höher dieser ist, desto niedriger ist die Viskosität des Baustoffes. Hinsichtlich der schon erwähnten Hydrogele gilt, dass das aus dem superabsorbierenden Copolymer durch Wasseraufnahme gebildete Hydrogel möglichst wenig in Wasser lösliche Anteile aufweisen soll, um die Rheologieeigenschaften der Baustoffmischungen nicht negativ zu beeinflussen.

Ein weiteres Problem bei Baustoffmischungen ist ein mit der Zeit einsetzendes Bluten; d.h. Wasser trennt sich von der angerührten Baustoffmischung ab, reichert sich an der Oberfläche an und schwimmt oben auf. Dieses Bluten ist generell unerwünscht, da es ebenfalls das für die Hydratation benötigte Anmachwasser der Baustoffmischung entzieht. Bei vielen Anwendungen lässt das verdunstete Wasser eine unschöne Salzkruste zurück, die generell unerwünscht ist.

Für Anwendungen von Trockenmörteln, wie z.B. Fugenmörteln und Verlaufsmassen für Fußböden, ist ein beschleunigter Abbindevorgang ebenfalls wünschenswert. Während der Verarbeitung in der Fuge oder auf dem Fußboden ist eine niedrige Viskosität gewünscht, in der Fuge soll diese dann schnell ansteigen, damit die Form erhalten bleibt. Je früher dies der Fall ist, desto früher können die verlegten Fliesen abgewaschen werden ohne die Fuge dabei wieder auszuwaschen. Dies würde für den Anwender eine deutliche Erleichterung darstellen, da Mörtelreste leichter von den Fugen entfernt werden könnten, ohne Zement-Schlieren zu hinterlassen bzw. die Oberfläche der Fliese anzugreifen.

Bisher wird dieses Verarbeitungsprofil durch eine Mischung von Portlandzement (PZ) und Tonerdezement (TZ) eingestellt. Damit kann zwar das gewünschte Rheologieprofil eingestellt werden, aber es treten andere Schwierigkeiten auf. Generell ist eine PZ/TZ-Formulierung schwieriger einzustellen und weniger sicher als eine reine PZ-Formulierung, d.h. Rohstoffschwankungen oder leichte Abweichungen in der Zusammensetzung haben große Auswirkungen. In den meisten PZ/TZ-Formulierungen muss zudem Li₂CO₃ zugefügt werden, was ein wesentlicher Kostentreiber für diese Produkte ist. Ein weiteres großes Problem bei der Anwendung ist die geringe Lagerstabilität. Es tritt nämlich beim Lagern eine Verschiebung des Rheologieprofils auf, was unerwünscht ist.

In vielen Fällen würden Formulierer von Trockenmörteln reine PZ-Systeme bevorzugen, so dass superabsorbierende Polymere mit einer möglichst zeitverzögerten Quellungswirkung einen wichtigen Baustein für zukünftige Formulierungen darstellen können.

Für Verlaufsmassen ist die oben diskutierte Frühfestigkeit ökonomisch sehr wichtig. Je höher die Frühfestigkeit, desto schneller können die weiteren Schichten auf einen Fußboden aufgebracht werden. Allerdings ist ein Mindestmaß an Anmachwasser notwendig, um die notwendige Fließfähigkeit einer Verlaufsmasse zu erreichen. Dies ist schwierig mit der gewünschten Frühfestigkeit zu verbinden, da diese wie oben beschrieben vom w/z-Wert abhängt. Somit wäre eine Aufkonzentrierung der Porenlösung nach der Anwendung auch hier gewünscht. Ein in der Praxis oft auftretendes Problem ist auch hier das oben beschriebene Bluten. Dieses tritt oft in den ersten Stunden nach der Verarbeitung auf. Das Wasser an der Oberfläche verdampft und hinterlässt ein unschönes Oberflächenbild (Verkrustung).

In der Betonfertigteil-Industrie herrscht in der heutigen Zeit ein hoher Kostendruck. Ein wesentlicher Bestandteil der Kostenstruktur ist die Verweilzeit in der Schalung. Je schneller das Fertigteil aus der Schalung genommen werden kann, desto günstiger ist die Herstellung. Es versteht sich von selbst, dass dies erst geschehen kann, wenn der Formkörper eine gewisse Stabilität aufweist. Zum Ausgießen der Form wird eine möglichst niedrige Viskosität benötigt, während anschließend in der Form eine eher hohe Viskosität des Betons gewünscht wird. Ideal wäre also ein Rheologie-Sprung der nicht ausgehärteten Baustoff-Mischung in der Schalung. Die Konsistenz eines Betons für die Fertigteil-Industrie hängt wieder vom Wasser-Zement-Wert (w/z-Wert) ab; je höher der w/z-Wert desto niedriger die Viskosität. Daneben wird die Konsistenz durch den Einsatz von Fließmitteln eingestellt.

An dieser Stelle sei auf die folgenden Dokumente verwiesen:
US 5,837,789 beschreibt ein vernetztes Polymer, welches zur Absorption von wässrigen Flüssigkeiten eingesetzt wird. Dieses Polymer ist aufgebaut aus teilweise neutralisierten Monomeren mit monoethylenisch ungesättigten Säuregruppen und ggf. weiteren Monomeren, die mit den ersten Baugruppen copolymerisiert sind. Beschrieben ist außerdem ein Verfahren zur Herstellung dieser Polymere, wobei zunächst die jeweiligen Ausgangskomponenten zu einem Hydrogel mit Hilfe einer Lösungs- oder Suspensionspolymerisation polymerisiert werden. Das so erhaltene Polymer kann an seiner Oberfläche anschließend vernetzt werden, was vorzugsweise bei erhöhten Temperaturen erfolgen sollte.

Gelpartikel mit superabsorbierenden Eigenschaften, die aus mehreren Komponenten zusammengesetzt sind, beschreibt US 6,603,056 B2. Die Gelpartikel umfassen mindestens ein Harz, welches in der Lage ist, saure wässrige Lösungen zu absorbieren und mindestens ein Harz, welches basische wässrige Lösungen aufnehmen kann. Jedes Partikel enthält außerdem mindestens eine Mikrodomäne des sauren Harzes, welche im unmittelbaren Kontakt zu einer Mikrodomäne des basischen Harzes steht. Das so erhaltene superabsorbierende Polymer zeichnet sich durch eine definierte Leitfähigkeit in Salzlösungen aus und außerdem durch eine definierte Aufnahmekapazität unter Druckbedingungen.

US 2006/0054056 beschreibt ein Verfahren zur Herstellung von Betonprodukten mit einer reduzierten Tendenz zu Ausblühungen. In diesem Zusammenhang finden Wasser absorbierende Polymere eine spezielle Anwendung. Diese absorbierenden Komponenten werden der Betonmischung in Pulverform, als Flüssigkeit oder als Granulat zugesetzt. Im Zusammenhang mit den Wasser absorbierenden Komponenten sind insbesondere organische Verdicker wie bspw. Cellulose und deren Derivate, aber auch Polyvinylalkohol und Polyacrylamide sowie Polyethylenoxide genannt. In Frage kommen aber auch stärkemodifizierte superabsorbierende Polyacrylate und unlösliche, mit Wasser quellbare und quervernetzte Celluloseether sowie des weiteren sulfonierte Monovinyliden-Polymere, Mannichacrylamidpolymere und Polydimethyldiallylammoniumsalze.

Aus WO 2004/020503 sind wasserlösliche hyperverzweigte Polyester bekannt. Viele wasserlösliche Polyester werden aber in der Regel aus Bauwerken wie beispielsweise Mauerwerk nach einiger Zeit, beispielsweise nach einem Jahr, wieder ausgeschwitzt und sind daher in der Regel nicht als Hilfsmittel für Baustoffe geeignet.

Die CH 629 232 A5 beschreibt einen ungesättigten Polyester erhältlich durch Umsetzung von Maleinsäureanhydrid, einem Diol und Pentaerythrit und dessen Verwendung in hydraulischen Bindemitteln.

Es bestand daher die Aufgabe, Mischungen bereit zu stellen, die eine besonders gute Fließfähigkeit aufweisen oder gute Fließfähigkeiten und weiterhin ein gutes zeitabhängiges Wasser absorbierendes Verhalten in Baustoffen erreichen lassen. Es bestand weiterhin die Aufgabe, Copolymere bereit zu stellen, die sich besonders als Zusatz in Baustoffen eignen, und es bestand die Aufgabe, ein Verfahren zur Herstellung von derartigen Copolymeren bereit zu stellen.

Dementsprechend wurden die eingangs definierten Mischungen gefunden, kurz auch als erfindungsgemäße Mischungen bezeichnet. Erfindungsgemäße Mischungen umfassen
(A) mindestens ein hydraulisches oder latent hydraulisches Bindemittel,
(B) mindestens ein Copolymer, erhältlich durch Umsetzung von
   (α1) mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, kurz Comonomer (α1), oder
   (α2) mindestens einem (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, kurz (Co)polymer (α2), mit
   (β) mindestens einer oligomeren oder polymeren Verbindung, kurz auch Oligomer (β) oder Polymer (β), genannt, die unten stehend weiter charakterisiert wird.

Unter hydraulischen Bindemitteln werden dabei solche vorzugsweise anorganischen Stoffe verstanden, die an der Luft und unter Wasser härten können. Unter latent hydraulischen Bindemitteln werden solche vorzugsweise anorganischen Stoffe verstanden, die in Gegenwart mindestens eines weiteren Baustoffs wie Kalk härten können, und zwar an der Luft und unter Wasser. Hydraulische und latent hydraulische Bindemittel werden im Rahmen der vorliegenden Erfindung auch kurz als Bindemittel (A) bezeichnet.

In einer Ausführungsform der vorliegenden Erfindung wird Bindemittel (A) gewählt aus Zement, Kalk, Gips, Halbhydrat, Anhydrit, Flugasche, Vulkanaschen wie beispielsweise Puzzolan, weiterhin Trass und Hochofenschlacke.

Erfindungsgemäße Mischungen enthalten weiterhin mindestens ein Copolymer (B). Bei Copolymer (B) handelt es sich vorzugsweise um einen Superabsorber, auch superabsorbierendes Polymer (B) oder Superabsorber (B) genannt.

Copolymer (B) ist erhältlich durch Umsetzung von
(α1) mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, insbesondere NH₂-Gruppen (Variante 1), oder
(α2) mindestens einem (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, insbesondere NH₂-Gruppen (Variante 2), mit
(β) mindestens einer oligomeren oder polymeren Verbindung (β).

Die beiden vorstehend genannten Varianten 1 und 2 unterscheiden sich hauptsächlich in der Art bzw. Position des Einbaus von oligomerer bzw. polymerer Verbindung (β) in Copolymer (B).

Im Rahmen der vorliegenden Erfindung basieren superabsorbierende Polymere (B) vorzugsweise auf ethylenisch ungesättigten Verbindungen, vorzugsweise gewählt aus ethylenisch ungesättigten Carbonsäuren und ethylenisch ungesättigten Sulfonsäuremonomeren sowie Salzen und Derivaten, insbesondere Methylestern von ethylenisch ungesättigten Carbonsäuren und ethylenisch ungesättigten Sulfonsäuremonomeren, vorzugsweise Acrylsäure, Methacrylsäure, Ethacrylsäure, α-Chloroacrylsäure, β-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, Itaconsäure, Citraconsäure, Mesaconsäure, Glutacon-säure, Aconitsäure, Maleinsäure, Fumarsäure, Tricarboxyethylen, Itaconsäureanhydrid, Maleinsäureanhydrid oder Mischungen daraus. Ganz besonders bevorzugt sind (Meth)acrylsäure und Maleinsäure.

Beispiele für geeignete Monomere mit Sulfonsäuregruppen sind Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure (AMPS).

Beispiele für geeignete Monomere mit Hydroxyalkylgruppen sind einfach mit ethyle-nisch ungesättigten Monocarbonsäuren veresterte aliphatische Diole. Beispiele für a-liphatische Diole sind Ethylenglykol, 1,2-Propandiol, 1,3-Propandiol, 1,2-Butandiol, 1,3-Butandiol, 1,4-Butandiol, 1,6-Hexandiol, 1,2-Hexandiol und 1,10-Dekandiol. Geeignete ethylenisch ungesättigte Monocarbonsäuren sind Crotonsäure und insbesondere (Meth)acrylsäure. Beispiele für besonders geeignete Monomere mit Hydroxyalkylgrupppen sind 2-Hydroxyethylacrylat, 2-Hydroxyethylmethacrylat, 3-Hydroxypropylacrylat, 3-Hydroxypropylmethacrylat, 2-Hydroxypropylacrylat, 2-Hydroxypropylmethacrylat, 4-Hydroxybutylacrylat und 4-Hydroxybutylmethacrylat.

Beispiele für geeignete Monomere mit Nitrilgruppen sind Acrylnitril und Methacrylnitril.

Beispiele für geeignete Monomere mit Aminogruppen sind solche mit primären, sekundären und vorzugsweise tertiären Aminogruppen, insbesondere solche mit einer tertiären Aminogruppe pro Molekül, sowie solche mit einer Carbonsäureamidgruppe. Bevorzugte Beispiele sind (Meth)acrylsäureester von Aminogruppen-haltigen Alkoholen. Besonders bevorzugt sind tert.-Butylaminoethyl(meth)acrylat, tert.-Butylaminopropyl(meth)acrylat und insbesondere N,N-Dimethylaminopropyl(meth)acrylat, N,N-Dimethylaminoethylmethacrylat und N,N-Diethylaminoethylacrylat.

Besonders geeignete Monomere mit Aminogruppen sind ausgewählt aus Acrylamid und Acrylamid-Derivaten, vorzugsweise alkylsubstituierten Acrylamiden oder aminoalkylsubstituierten Derivaten des Acrylamids oder des Methacrylamids und besonders bevorzugt aus Acrylamid, Methacrylamid, N-Methylacrylamid, N-Methylmethacrylamid, N,N-Dimethylacrylamid, N-Ethylacrylamid, N,N-Diethylacrylamid, N-Cyclohexylacrylamid, N-Benzylacrylamid, N,N-Dimethylaminopropylacrylamid, N,N-Dimethylaminoethylacrylamid, N-tert.-Butylacrylamid, N-Vinylformamid, N-Vinylacetamid, oder Mischungen daraus.

Vorzugsweise enthält Copolymer (B) Acrylamid einpolymerisiert.

In einer Ausführungsform der vorliegenden Erfindung enthält Superabsorber (B) mindestens einen, bevorzugt mindestens zwei Vernetzer einpolymerisiert. Unter Vernetzern werden im Folgenden solche Comonomere verstanden, die mindestens zwei Polymerketten miteinander verknüpfen können, beispielsweise weil sie zwei polymerisierbare ethylenische Doppelbindungen pro Molekül aufweisen. Der eigentliche Superabsorber bildet dann ein wasserquellbares, aber wasserunlösliches Netzwerk.

In einer Ausführungsform der vorliegenden Erfindung werden Vernetzer aus der Gruppe der hydrolysestabilen und aus der Gruppe der hydrolyselabilen Vernetzer ausgewählt. Unter einem hydrolysestabilen Vernetzer soll ein Vernetzer verstanden werden, der - im Netzwerk eingebaut - pH-Wert-unabhängig seine vernetzende Wirkung behält. Die Verknüpfungspunkte des Netzwerkes können also nicht durch eine pH-Wert-Änderung des Quellmediums aufgebrochen werden. Im Gegensatz dazu stehen hydrolyselabile Vernetzer, die - im Netzwerk eingebaut - ihre vernetzende Wirkung durch eine Änderung des pH-Wertes verlieren können. Beispiele sind Di(meth)acrylatvernetzer, die durch alkalische Esterhydrolyse ihre vernetzende Wirkung verlieren.

Mögliche hydrolysestabile Vernetzer sind N,N'-Methylenbis(meth)acrylamid und mehr als eine Maleinimidgruppe pro Molekül aufweisende Monomere wie Hexamethylenbismaleinimid; mehr als eine Vinylethergruppe pro Molekül aufweisende Monomere wie Ethylenglykoldivinylether, Triethylenglykoldivinylether und/oder Cyclohexandioldiviny-lether, beispielsweise Cyclohexan-1,4-dioldivinylether. Auch können Allylamino- oder Allylammonium-Verbindungen mit mehr als einer Allylgruppe, wie Triallylamin und/oder Tetraallylammoniumsalze eingesetzt werden. Zu den hydrolysestabilen Vernetzern gehören auch die Allylether, wie Tetraallyloxyethan und Pentaerythrittriallylether.

Aus der Gruppe der mehr als eine vinylaromatische Gruppe aufweisenden Monomere seien Divinylbenzol und Triallylisocyanurat genannt.

Es ist bevorzugt, wenn als hydrolysestabiler Vernetzer mindestens ein Vertreter der Reihe N,N'-Methylenbisacrylamid, N,N'Methylenbismethacrylamid oder Monomere mit mindestens einer Maleinimidgruppe pro Molekül, vorzugsweise Hexamethylenbismaleinimid, Monomere mit mehr als einer Vinylethergruppe pro Molekül, vorzugsweise Ethylenglykoldivinylether, Triethylenglykoldivinylether, Cyclohexandioldivinylether, Allylamino- oder Allylammoniumverbindungen mit mehr als einer Allylgruppe, vorzugsweise Triallylamin oder ein Tetraallylammoniumsalz wie Tetraallylammoniumchlorid, oder Allylether mit mehr als einer Allylgruppe, wie Tetraallyloxyethan und Pentaerythrittriallylether, oder Monomere mit vinylaromatischen Gruppen, vorzugsweise Divinylbenzol und Triallylisocyanurat, oder Diamine, Triamine, Tetramine oder höherwertige Amine, vorzugsweise Ethylendiamin und Diethylentriamin eingesetzt werden.

Hydrolyselabile Vernetzer können sein: Mehrfach (meth)acrylfunktionelle Monomere, wie 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, Ethylenglykoldiacrylat, Ethylenglykoldimethacrylat, ethoxyliertes Bisphenol-A-diacrylat, ethoxyliertes Bisphenol-A-dimethacrylat, 1,6-Hexandioldiacrylat, 1,6-Hexandiol-dimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropy-lenglykoldi(meth)acrylat, Tetraethylenglykoldiacrylat, Tetraethylenglykoldimethacrylat, Dipentaerythritpentaacrylat, Pentaerythrittetraacrylat, Pentaerythrittriacrylat, Trimethy-lolpropantriacrylat, Trimethylolpropantrimethacrylat, Cyclopentadiendiacrylat, Tris(2-hydroxyethyl)isocyanurattriacrylat und/oder Tris(2-hydroxyethyl)isocyanurattrimethacrylat; pro Molekül mehr als eine Vinylester- bzw. Allylestergruppe mit entsprechender Carbonsäure aufweisende Monomere wie Divinylester von Polycarbonsäuren, Diallylester von Polycarbonsäuren, beispielsweise Diallylte-rephthalat, Diallylmaleat, Diallylfumarat, Trivinyltrimellitat, Divinyladipat und/oder Diallylsuccinat.

Als bevorzugte Vertreter der hydrolyselabilen Vernetzer werden Verbindungen einpolymerisiert, ausgewählt aus der Reihe der Di-, Tri- oder Tetra(meth)acrylate, wie 1,4-Butandioldi(meth)acrylat, 1,3-Butylenglykoldi(meth)acrylat, 1,2-Butylenglykoldi(meth)acrylat, Diethylenglykoldi(meth)acrylat, Ethylenglykoldiacrylat, Ethylenglykoldimethacrylat, ethoxyliertes Bisphenol-A-diacrylat, ethoxyliertes Bisphenol-A-dimethacrylat, 1,6-Hexandioldiacrylat, 1,6-Hexandioldimethacrylat, Neopentylgly-koldi(meth)acrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethylolpropantrimethacrylat, Cyclopentadiendiacrylat, Tris(2-hydroxyethyl)isocyanurattriacrylat und/oder Tris(2-hydroxyethyl)isocyanurat-trimethacrylat, der mehr als eine Vinylester-, bzw. Allylestergruppe mit entsprechenden Carbonsäuren aufweisenden Monomere wie Divinylester von Polycarbonsäuren, Diallylester von Di- oder Polycarbonsäuren, beispielsweise Diallylterephthalat, Diallylmaleat, Diallylfumarat, Trivinyltrimellitat, Divinyladipat und/oder Diallylsuccinat oder mindestens ein Vertreter der Verbindungen mit mindestens einer vinylischen oder allylischen Doppelbindung und mindestens einer Epoxygruppe wie Glycidylacrylat, Allylglycidylether oder der Verbindungen mit mehr als einer Epoxygruppe wie Ethylenglykoldiglycidether, Diethylenglykoldiglycidether, Polyethylenglykoldiglydidether, Polypropylenglykoldiglycidether oder der Verbindungen mit mindestens einer vinylischen oder allylischen Doppelbindung und mindestens einer (Meth)acrylatgruppe wie Polyethlenglykolmonoallyl-etheracrylat oder Polyethylenglykolmonoallylether-methacrylat.

Weitere Vernetzer, die funktionelle Gruppen sowohl aus der Klasse der hydrolyselabilen als auch der hydrolysestabilen Vernetzer enthalten, sollen dann zu den hydrolyselabilen Vernetzern gezählt werden, wenn sie maximal einen hydrolysestabilen Vernetzungspunkt bilden. Typische Beispiele für solche Vernetzer sind Polyethylenglykolmonoallylether-acrylat und Polyethylenglykol-monoallylether-methacrylat.

Neben Vernetzern mit zwei oder mehr ethylenischen Doppelbindungen pro Molekül sind auch solche geeignet, die nur eine oder keine Doppelbindung enthalten, dafür aber andere funktionelle Gruppen, die mit anderen Comonomeren von Superabsorber (B) reagieren können und während des Herstellungsprozesses von Superabsorber (B) zu Vernetzungspunkten führen. Besonders geeignete funktionelle Gruppen sind vor allem Epoxygruppen und nucleophile, d. h. primäre oder sterisch nicht aufwändig substituierte sekundäre Aminogruppen. Beispiele für solche Vernetzer mit einer ethylenischen Doppelbindung sind Glycidylacrylat, Allylglycidether. Beispiele für Vernetzer ohne Doppelbindung sind nucleophile Diamine wie Ethylendiamin, Triamine wie Diethylentriamin, Verbindungen mit vier oder mehr nucleophilen Aminogruppen pro Molekül, oder Diepoxide wie Ethylenglykoldiglycidether, Diethylenglykoldiglycidether, Polyethylenglykoldiglycidether und Polypropylenglykoldiglycidether.

Bei der Herstellung von Superabsorber (B) werden üblicherweise in Summe so hohe Vernetzermengen eingesetzt, dass ein sehr engmaschiges Netzwerk entsteht. Damit weist Superabsorber (B) eine nur geringe Aufnahmekapazität nach kurzen Zeiten (zwischen 5 und 10 Minuten - bezogen auf die endgültige Quellung nach Hydrolyse sämtlicher Vernetzungspunkte) auf.

In einer Ausführungsform der vorliegenden Erfindung werden im Bereich von 0,01 bis 1,0 mol-%, bevorzugt von 0,03 bis 0,7 mol-% und besonders bevorzugt von 0,05 bis 0,5 mol-% hydrolysestabile(r) Vernetzer einpolymerisiert, bezogen jeweils auf Superabsorber (B).

In einer Ausführungsform der vorliegenden Erfindung werden im Bereich von 0,1 bis 10,0 mol-%, bevorzugt 0,3 bis 7 mol-% und besonders bevorzugt 0,5 bis 5,0 mol-% hydrolyselabile(r) Vernetzer einpolymerisiert, bezogen auf gesamten Superabsorber (B).

Es ist bevorzugt, dass mehr hydrolyselabile(r) Vernetzer einpolymerisiert wird als hydrolysestabile(r) Vernetzer.

Einpolymerisiertes Oligomer (β) oder Polymer (β) wirkt als hydrolyselabiler Vernetzer.

In einer Ausführungsform der vorliegenden Erfindung sind die Säuregruppen in Copolymer (B) zumindest partiell, vorzugsweise vollständig neutralisiert, beispielsweise mit Alkalimetallionen, insbesondere mit Na⁺, oder mit Mg²⁺, Ca²⁺, Ammonium oder mit einem oder mehreren Aminen. Das Neutralisieren kann mit basischen Salzen erfolgen, beispielsweise mit Hilfe von Natrium-, Kalium-, Calcium- oder Magnesium-Hydroxid, von Natrium-, Kalium-, Calcium- oder Magnesium-Carbonat, weiterhin mit Ammoniak, mit primärem, sekundärem oder tertiärem C₁-C₂₀-Alkylamin, mit C₁-C₂₀-Alkanolamin, mit C₅-C₈-Cycloalkylamin und/oder mit C₆-C₁₄-Arylamin, wobei vorstehend genannte Amine eine oder mehrere verzweigte oder unverzweigte Alkylgruppen mit 1 bis 8 Kohlenstoffatomen aufweisen können.

Superabsorber (B) können weiterhin ein oder mehrere weitere Comonomere, insbesondere ein oder mehrere nicht-ionische Comonomere einpolymerisiert enthalten. Weitere geeignete Comonomere sind Vinyllactame wie N-Vinylpyrrolidon oder N-Vinylcaprolactam und Vinylether wie Methylpolyethylenglykol-(350 bis 3000)-monovinylether, oder solche, die sich von Hydroxybutylvinylether ableiten wie Polyethylenglykol-(500 bis 5000)-vinyloxy-butylether, Polyethylenglykol-blockpropylenglykol-(500 bis 5000)-vinyloxy-butylether, wobei auch Mischungen in Frage kommen.

In einer Ausführungsform der vorliegenden Erfindung handelt es sich bei Superabsorber (B) um ein nicht wasserlösliches Copolymer, d. h. die Wasserlöslichkeit bei 25°C in destilliertem Wasser (pH-Wert im Bereich von 6 bis 7) liegt unter 1 g/l.

In einer Ausführungsform der vorliegenden Erfindung enthält Superabsorber (B) mindestens zwei der vorstehend genannten Comonomere einpolymerisiert, beispielsweise (Meth)acrylsäure und mindestens einen hydrolysestabilen Vernetzer.

In einer Ausführungsform der vorliegenden Erfindung enthält Superabsorber (B) mindestens eine ethylenisch ungesättigte Carbonsäure und mindestens einen (Meth)acrylsäureester von Aminogruppen-haltigen Alkoholen eingebaut, vorzugsweise bis zu 5 Gew.-% ethylenisch ungesättigte Carbonsäure und bis zu 30 Gew.-% (Meth)acrylsäureester von Aminogruppen-haltigen Alkoholen.

Superabsorber (B) enthält mindestens eine oligomere oder polymere Verbindung (β) einpolymerisiert, im Rahmen der vorliegenden Erfindung auch kurz als Oligomer (β) bzw. Polymer (β) bezeichnet. Oligomer (β) bzw. Polymer (β) ist erhältlich durch Umsetzung von
(a) mindestens einer ethylenisch ungesättigten Di- oder Polycarbonsäure oder ihrem Anhydrid oder Ester, im Rahmen der vorliegenden Erfindung kurz auch Dicarbonsäure (a) bzw. Polycarbonsäure (a) bzw. Anhydrid oder Ester von Dicarbonsäure (a) bzw. Polycarbonsäure (a) genannt, mit
(b) mindestens einem mindestens trifunktionellen Alkohol, im Rahmen der vorliegenden Erfindung auch kurz Alkohol (b) genannt, und
(c) mindestens einer Verbindung der allgemeinen Formel I 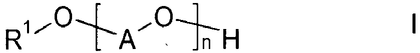 in der die Variablen wie folgt definiert sind:
   R¹ ist gewählt aus C₁-C₄-Alkyl, beispielsweise Methyl, Ethyl, n-Propyl, iso-Propyl, n-Butyl, iso-Butyl, sec.-Butyl und tert.-Butyl, bevorzugt ist Ethyl und besonders bevorzugt Methyl.

A sind verschieden oder vorzugsweise gleich und gewählt aus C₂-C₆-Alkylen, beispielsweise -CH₂-CH₂-, -CH₂-CH₂-CH₂-, -CH₂-CH(CH₃)-, -CH(CH₃)-CH₂-, -CH₂-CH(C₂H₅)-, -CH(C₂H₅)-CH₂-, -(CH₂)₄-, -(CH₂)₅-, -(CH₂)₆-, insbesondere -CH₂-CH₂-.

n liegt im Bereich von 4 bis 40, bevorzugt 10 bis 20. Dabei kann es sich bei der Variable n um einen Mittelwert handeln, bevorzugt das Zahlenmittel.

In einer Ausführungsform der vorliegenden Erfindung wird Dicarbonsäure (a) gewählt aus ethylenisch ungesättigten C₄-C₁₀-Di- oder Polycarbonsäuren, bevorzugt aus monoethylenisch ungesättigten C₄-C₁₀-Dicarbonsäuren, also C₄-C₁₀-Dicarbonsäuren mit einer C-C-Doppelbindung pro Molekül, oder ihren Anhydriden. Beispiele sind Maleinsäure, Fumarsäure, Itaconsäure, Citraconsäure, Methylenmalonsäure, Metaconsäure, Maleinsäureanhydrid, insbesondere Maleinsäure und Maleinsäureanhydrid.

Dicarbonsäure (a) bzw. Polycarbonsäure (a) kann ganz oder zu einem gewissen Prozentsatz ersetzt sein durch die entsprechenden Ester, insbesondere Mono-, Di- oder Poly-C₁-C₄-Alkylester, insbesondere durch die Mono- oder Dimethylester oder die Mono- oder Diethylester.

In einer Ausführungsform der vorliegenden Erfindung wird Alkohol (b) gewählt aus Tri-, Tetra- oder Polyolen mit 3 bis 10 C-Atomen pro Molekül, beispielsweise Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, N,N,N-Triethanolamin, Triisopropylamin, Trimethylolbutan, Trimethylolpropan, Trimethylolethan, Pentaerythrit oder Dipentaerythrit, Bistrimethylolpropan, Bistrimethylolethan, Zuckeralkoholen wie beispielsweise Mesoerythrit, Threitol, Sorbit, Mannit oder Gemischen der vorstehenden Alkohole (b). Bevorzugt sind Glycerin, Trimethylolpropan, Trimethylolethan oder Pentaerythrit, ganz besonders bevorzugt ist Trimethylolpropan.

In einer Ausführungsform der vorliegenden Erfindung ist Alkohol (b) gewählt aus C₃-C₈-Triolen.

In einer Ausführungsform der vorliegenden Erfindung ist Alkohol (b) gewählt aus C₃-C₈-Triolen, die ein- oder mehrfach mit mindestens einem Alkylenoxid (e) alkoxyliert sind. Dabei wird Alkylenoxid (e) gewählt aus C₃-C₆-Alkylenoxid, beispielsweise Propylenoxid, Butylenoxid, Tetrahydrofuran, einzeln oder als Mischung, bevorzugt Mischungen von Propylenoxid und Butylenoxid, besonders bevorzugt aus Propylenoxid oder Butylenoxid und insbesondere Propylenoxid.

In einer Ausführungsform der vorliegenden Erfindung ist Alkohol (b) gewählt aus C₃-C₈-Triolen, die ein- oder mehrfach mit mindestens einem Alkylenoxid (e) alkoxyliert sind. Dabei wird Alkylenoxid (e) gewählt aus C₃-C₆-Alkylenoxid, wobei bis zu 33 mol-% von Alkylenoxid (e) ersetzt sein können durch Ethylenoxid, beispielsweise 0,1 bis 30 mol-%, bevorzugt 1 bis 10 mol-%. Dabei sind Angaben in mol-% bezogen auf den gesamten Anteil an Alkylenoxid (e).

In einer Ausführungsform der vorliegenden Erfindung wird Alkohol (b) gewählt aus C₃-C₈-Triolen, die mit 1 bis 30 mol C₃-C₆-Alkylenoxid (e) pro mol mindestens trifunktionellem Alkohol (b) alkoxyliert sind, wobei Alkylenoxid (e) gewählt wird aus C₃-C₆-Alkylen-oxid. Dabei können bis zu 33 mol-% von Alkylenoxid (e) durch Ethylenoxid ersetzt sein.

In einer Ausführungsform der vorliegenden Erfindung handelt es sich bei Alkohol (b) um nicht wasserlöslichen Alkohol. Dabei wird unter "nicht wasserlöslich" verstanden, dass bei 25°C in destilliertem Wasser weniger als 1 g/l löslich sind.

In einer Ausführungsform der vorliegenden Erfindung kann in Oligomer (β) bzw. Polymer (β) mindestens eine weitere Verbindung (d) eingebaut (einkondensiert) sein, kurz auch Verbindung (d) genannt, beispielsweise mindestens eine weitere Verbindung mit mindestens einer COOH-Gruppe oder mindestens einer alkoholischen OH-Gruppe pro Molekül. Beispiele sind Dicarbonsäuren ohne C-C-Doppelbindungen, beispielsweise Adipinsäure oder Bernsteinsäure. Andere Beispiele sind C₂-C₁₀-Diole, beispielsweise Ethylenglykol, Propylenglykol, Propan-1,3-diol, Butan-1,4-diol, Neopentylglykol, N,N-Diethanolamin, Hexan-1,6-diol, Oktan-1,8-diol und Dekan-1,10-diol.

In einer Ausführungsform der vorliegenden Erfindung enthält Oligomer (β) bzw. Polymer (β) im Bereich von 1 bis 25 mol-%, bevorzugt 2 bis 20 mol-%, besonders bevorzugt 5 bis 15 mol-% Verbindung (d) eingebaut, bezogen auf Di- bzw. Polycarbonsäure (a).

In einer anderen Ausführungsform der vorliegenden Erfindung sind in Oligomer (β) bzw. Polymer (β) keine weiteren Verbindungen (d) eingebaut (einkondensiert).

In einer Ausführungsform der vorliegenden Erfindung kann Oligomer (β) bzw. Polymer (β) eine hyperverzweigte Struktur haben, wie sie dem Grunde nach beispielsweise in Sunder et al., Chem. Eur. J. 2000, 6, 2499 - 2506 erläutert ist.

In einer Ausführungsform der vorliegenden Erfindung kann Oligomer (β) bzw. Polymer (β) bis zu zwanzig, bevorzugt zwei bis zehn Verzweigungen pro Molekül aufweisen.

In einer Ausführungsform der vorliegenden Erfindung beträgt die Verzweigungsdichte (engl. degree of branching) von Oligomer (β) bzw. Polymer (β) im Bereich von 0,1 bis 1,0, bevorzugt 0,1 bis 0,9 und insbesondere 0,2 bis 0,8. Die Verzweigungsdichte ist beispielsweise in H. Frey et al., Acta Polym. 1997, 48, 30 definiert.

In einer Ausführungsform der vorliegenden Erfindung weist Oligomer (β) bzw. Polymer (β) eine Säurezahl im Bereich von 10 bis 200 mg KOH/g, bevorzugt 20 bis 150 mg KOH/g, besonders bevorzugt 40 bis 120 mg KOH/g auf, bestimmt nach DIN 53402.

In einer Ausführungsform der vorliegenden Erfindung weist Oligomer (β) bzw. Polymer (β) ein mittleres Molekulargewicht Mₙ im Bereich von 700 bis 10.000 g/mol, bevorzugt 800 bis 5.000 g/mol auf.

In einer Ausführungsform der vorliegenden Erfindung weist Oligomer (β) bzw. Polymer (β) ein mittleres Molekulargewicht M_{w} im Bereich von 2.000 bis 50.000 g/mol, bevorzugt 2.000 bis 25.000 g/mol auf.

Dabei werden mittleres Molekulargewicht Mₙ bzw. M_{w} vorzugsweise durch Gelpermeationschromatographie (GPC) gemessen. Ein geeigneter Standard ist Polymethylmethacrylat (PMMA).

In einer Ausführungsform der vorliegenden Erfindung setzt man bei der Herstellung von Oligomer (β) bzw. Polymer (β) so viel Dicarbonsäure (a) bzw. Polycarbonsäure (a) einerseits und Alkohol (b) und Verbindung der allgemeinen Formel I andererseits ein, dass das molare Verhältnis der alkoholischen OH-Gruppen zu den COOH-Gruppen im Bereich von 1 : 2 bis 2 : 1 liegt, bevorzugt 1 : 1,7 bis 1,7 : 1, insbesondere 1 : 1,7 bis 1,3 : 1. Dabei soll eine Dicarbonsäureanhydridgruppe wie zwei COOH-Gruppen zählen.

In einer Ausführungsform der vorliegenden Erfindung setzt man bei der Herstellung von Oligomer (β) bzw. Polymer (β) Alkohol (b) und Verbindung der allgemeinen Formel I in einem Molverhältnis im Bereich von 5 : 1 bis 1,5 : 1, bevorzugt 3 : 1 bis 1,5 : 1 und ganz besonders bevorzugt 2,5 : 1 bis 1,8 : 1 ein.

In einer Ausführungsform der vorliegenden Erfindung kann Superabsorber (B) als hydrolysestabile Vernetzergruppe Divinylamin oder N,N'-Methylenbisacrylamid eingebaut enthalten.

Erfindungsgemäße Mischung kann einen oder mehrere Zusatzstoffe (D) enthalten, beispielsweise einen oder mehrere Füllstoffe. Geeignete anorganische Füllstoffe sind zum Beispiel Quarzsand, Kalksteinmehl, Kreide, Marmor, Ton, Mergel, Aluminiumoxid, Talkum und/oder Schwerspat, wobei Quarzsand und Kalksteinmehl bevorzugt sind. Anorganische Füllstoffe können bevorzugt auch als Leichtfüllstoffe wie Mikrohohlkugeln aus Glas, wie Blähglas, und als Alumosilikate, wie Perlithe und Blähton, vorliegen. Leichtfüllstoffe auf natürlicher Basis wie zum Beispiel Mineralschaum, Bims, Schaumlava und/oder Bläh-Vermiculit sind ebenfalls bevorzugt. Erfindungsgemässe organische Füllstoffe sind beispielsweise geschredderte Polymerabfälle, wie zum Beispiel aus Polyvinylchlorid, Polystyrol, Polyethylen, Polypropylen oder Melaminharzen. Gummipartikel und/oder Styroporkugeln stellen bevorzugte organische Füllstoffe dar.

In einer Ausführungsform der vorliegenden Erfindung beträgt das Gewichtsverhältnis von Bindemittel (A) zu Copolymer (B) mindestens 98:2, bevorzugt mindestens 99:1.

In einer Ausführungsform der vorliegenden Erfindung beträgt das Gewichtsverhältnis von Bindemittel (A) zu Copolymer (B) maximal 1000:1.

In einer Ausführungsform der vorliegenden Erfindung enthält erfindungsgemäße Mischung
im Bereich von 94 bis 99,9 Gew.-%, bevorzugt von 97,9 bis 99,5 Gew.-% Bindemittel (A),
im Bereich von 0,01 bis 5 Gew.-%, bevorzugt von 0,1 bis 2 Gew.-% Copolymer (B), gegebenenfalls insgesamt im Bereich von 0,01 bis 5 Gew.-%, bevorzugt von 0,1 bis 3 Gew.-% Zusatzstoff(e) (D),
jeweils bezogen auf gesamte erfindungsgemäße Mischung.

Ein weiterer Gegenstand der vorliegenden Erfindung sind mineralische Baustoffe, enthaltend Wasser und mindestens eine erfindungsgemäße Mischung. Erfindungsgemäße mineralische Baustoffe lassen sich beispielsweise durch Vermischen von Wasser mit mindestens einer erfindungsgemäßen Mischung und gegebenenfalls mit Sand oder Kies herstellen. Eine Art des Vermischens ist beispielsweise das Verrühren. Eine andere Art des Vermischens erfolgt in einem drehbaren Gerät mit strömungsbrechenden Einbauten, beispielsweise in einem Betonmischer.

Das eingesetzte Wasser kann beliebige Härte aufweisen, beispielsweise in ° dH gemessen.

In einer Ausführungsform der vorliegenden Erfindung weisen erfindungsgemäße mineralische Baustoffe einen Feststoffgehalt im Bereich von mindestens 50 Gew.-%, bevorzugt mindestens 60 Gew.-% auf.

In einer anderen Ausführungsform der vorliegenden Erfindung weisen erfindungsgemäße mineralische Baustoffe einen Wassergehalt von bis zu 80 Gew.-% auf.

In einer Ausführungsform der vorliegenden Erfindung weisen erfindungsgemäße mineralische Baustoffe einen Feststoffgehalt von maximal 99 Gew.-% auf.

In einer Ausführungsform der vorliegenden Erfindung handelt es sich bei erfindungsgemäßen Mischungen um Trockenmörtel, bevorzugt um einen Fliesenkleber, Fugenfüller, eine Spachtelmasse, Dichtschlämme oder Mörtelmasse.

In einer Ausführungsform der vorliegenden Erfindung handelt es sich bei erfindungemäßen Mischungen um eine Verlaufsmasse oder einen Beton, insbesondere um einen Fertigbeton.

Erfindungsgemäße mineralische Baustoffe und erfindungsgemäße Mischungen lassen sich besonders gut zur Herstellung von Bauwerken einsetzen, insbesondere von Bauwerken, die unter Einsatz von Betonfertigteilen hergestellt werden. Derartige Fertigteile können beispielsweise im Readymix-Verfahren hergestellt werden. Erfindungsgemäße mineralische Baustoffe weisen ein stark zeitabhängiges Viskositätsverhalten auf. Zunächst, beispielsweise über einen Zeitraum im Bereich von einer Minute nach der Herstellung bis etwa 3 Stunden, bevorzugt bis etwa 2 Stunden weisen erfindungsgemäße Baustoffe ein gutes Fließverhalten auf. Beispielsweise lassen sich erfindungsgemäße Baustoffe aus Gefäßen ausgießen. Weiterhin lassen sich erfindungsgemäße Baustoffe mit geeigneten Geräten, beispielsweise mit Kellen, verteilen, insbesondere verstreichen.

Nach einer längeren Zeit, beispielsweise mindestens drei Stunden nach ihrer Formulierung, bevorzugt zwei Stunden nach ihrer Formulierung, verfestigen sich erfindungsgemäße Baustoffe innerhalb eines kürzen Zeitintervalls, beispielsweise innerhalb von 10 Minuten, bevorzugt innerhalb von fünf Minuten, in einem Ausmaß, dass sie nicht mehr fließfähig sind. Sie lassen sich dann nicht mehr aus Gefäßen ausgießen, sondern beispielsweise nur noch nach der Art eines Puddings stürzen und bilden im Wesentlichen formstabile Placken.

Mit Hilfe von erfindungsgemäßen Mischungen bzw. erfindungsgemäßen mineralischen Baustoffen hergestellte Bauwerke, beispielsweise Häuser oder Brücken, lassen sich besonders gut und in kurzer Zeit herstellen.

Ein weiterer Aspekt der vorliegenden Erfindung sind oligomere oder polymere Verbindungen (β'), im Folgenden auch erfindungsgemäße Oligomere (β') bzw. erfindungsgemäße Polymere (β') genannt. Erfindungsgemäße Oligomere (β') bzw. erfindungsgemäße Polymere (β') sind erhältlich durch Umsetzung von
(a) mindestens einer ethylenisch ungesättigten Di- oder Polycarbonsäure oder ihrem Anhydrid oder Ester mit
(b) mindestens einem mindestens trifunktionellen Alkohol und
(c) mindestens einer Verbindung der allgemeinen Formel I 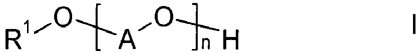 in der die Variablen wie folgt definiert sind:
   R¹ ist gewählt aus C₁-C₄-Alkyl,
   A ist gleich oder verschieden und gewählt aus C₂-C₆-Alkylen,
   n liegt im Bereich von 4 bis 40, und
(d) gegebenenfalls mindestens einer weiteren Verbindung mit mindestens einer COOH-Gruppe oder mindestens einer alkoholischen OH-Gruppe pro Molekül,
wobei mindestens trifunktioneller Alkohol (b) gewählt wird aus C₃-C₈-Triolen, die mit Alkylenoxid (e) alkoxyliert sein können und vorzugsweise sind, wobei Alkylenoxid (e) gewählt wird aus C₃-C₆-Alkylenoxid, beispielsweise Propylenoxid, Butylenoxid, Tetrahydrofuran, einzeln oder als Mischung, bevorzugt Mischungen von Propylenoxid und Butylenoxid, besonders bevorzugt aus Propylenoxid oder Butylenoxid und insbesondere Propylenoxid.

In einer Ausführungsform der vorliegenden Erfindung wird Dicarbonsäure (a) gewählt aus ethylenisch ungesättigten C₄-C₁₀-Di- oder Polycarbonsäuren, bevorzugt aus monoethylenisch ungesättigten C₄-C₁₀-Dicarbonsäuren, also C₄-C₁₀-Dicarbonsäuren mit einer C-C-Doppelbindung pro Molekül, oder ihren Anhydriden oder ihren Mono- oder Di- oder Poly-C₁-C₄-Alkylestern, insbesondere die Mono- oder Dimethylester oder die Mono- oder Diethylester. Beispiele für Dicarbonsäure (a) sind Maleinsäure, Fumarsäure, Itaconsäure, Citraconsäure, Methylenmalonsäure, Metaconsäure, Maleinsäureanhydrid, insbesondere Maleinsäure und Maleinsäureanhydrid.

In einer Ausführungsform der vorliegenden Erfindung wird Alkohol (b) gewählt aus Tri-, Tetra- oder Polyolen mit 3 bis 10 C-Atomen pro Molekül, beispielsweise Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, N,N,N-Triethanolamin, Triisopropylamin, Trimethylolbutan, Trimethylolpropan, Trimethylolethan, Pentaerythrit oder Dipentaerythrit, Bis-Trimethylolpropan, Bis-Triethylolpropan, Zuckeralkoholen wie beispielsweise Mesoerythrit, Threitol, Sorbit, Mannit oder Gemischen der vorstehenden Alkohole (b). Bevorzugt sind Glycerin, Trimethylolpropan, Trimethylolethan oder Pentaerythrit, ganz besonders bevorzugt ist Trimethylolpropan.

In einer Ausführungsform der vorliegenden Erfindung wird Alkohol (b) gewählt aus C₃-C₈-Triolen, die mit 1 bis 30 mol C₃-C₆-Alkylenoxid (e) pro mol mindestens trifunktionellem Alkohol (b) alkoxyliert sind, wobei Alkylenoxid (e) gewählt wird aus C₃-C₆-Alkylen-oxid. Dabei können bis zu 33 mol-% von Alkylenoxid (e) durch Ethylenoxid ersetzt sein.

In einer Ausführungsform der vorliegenden Erfindung sind bis zu 33 mol-% von Alkylenoxid (e) ersetzt durch Ethylenoxid, beispielsweise 0,1 bis 30 mol-%, bevorzugt 1 bis 10 mol-%. Dabei sind Angaben in mol-% bezogen auf den gesamten Anteil an Alkylenoxid (e).

In einer Ausführungsform der vorliegenden Erfindung handelt es sich bei Alkohol (b) um nicht wasserlöslichen Alkohol. Dabei wird unter "nicht wasserlöslich" verstanden, dass bei 25°C in destilliertem Wasser weniger als 1 g/l löslich sind.

In einer Ausführungsform der vorliegenden Erfindung kann in erfindungsgemäßem Oligomer (β') bzw. erfindungsgemäßem Polymer (β') mindestens eine weitere Verbindung (d) eingebaut (einkondensiert) sein, kurz auch Verbindung (d) genannt, beispielsweise mindestens eine weitere Verbindung mit mindestens einer COOH-Gruppe oder mindestens einer alkoholischen OH-Gruppe pro Molekül. Beispiele sind Dicarbonsäuren ohne C-C-Doppelbindungen, beispielsweise Adipinsäure oder Bernsteinsäure. Andere Beispiele sind C₂-C₁₀-Diole. Beispiele für geeignete C₂-C₁₀-Diole sind vorstehend genannt.

In einer anderen Ausführungsform der vorliegenden Erfindung sind in erfindungsgemäßem Oligomer (β') bzw. erfindungsgemäßem Polymer (β') keine weiteren Verbindungen (d) eingebaut (einkondensiert).

In einer Ausführungsform der vorliegenden Erfindung kann erfindungsgemäßes Oligomer (β') bzw. erfindungsgemäßes Polymer (β') eine hyperverzweigte Struktur haben, wie sie dem Grunde nach beispielsweise in Sunder et al., Chem. Eur. J. 2000, 6, 2499 - 2506 erläutert ist.

In einer Ausführungsform der vorliegenden Erfindung kann erfindungsgemäßes Oligomer (β') bzw. erfindungsgemäßes Polymer (β') bis zu zehn, bevorzugt zwei bis fünf Verzweigungen pro Molekül aufweisen.

In einer Ausführungsform der vorliegenden Erfindung beträgt die Verzweigungsdichte (engl. degree of branching) von erfindungsgemäßem Oligomer (β') bzw. erfindungsgemäßem Polymer (β') im Bereich von 0,1 bis 1,0, bevorzugt 0,1 bis 0,9 und insbesondere 0,2 bis 0,8.

In einer Ausführungsform der vorliegenden Erfindung weist erfindungsgemäßes Oligomer (β') bzw. erfindungsgemäßes Polymer (β') eine Säurezahl im Bereich von 10 bis 200 mg KOH/g auf, bevorzugt 20 bis 150 mg KOH/g, besonders bevorzugt 40 bis 120 mg KOH/g, bestimmt nach DIN 53402.

In einer Ausführungsform der vorliegenden Erfindung weist erfindungsgemäßes Oligomer (β') bzw. erfindungsgemäßes Polymer (β') ein mittleres Molekulargewicht Mₙ im Bereich von 700 bis 10.000 g/mol, bevorzugt 800 bis 5.000 g/mol auf, bestimmt beispielsweise durch GPC.

In einer Ausführungsform der vorliegenden Erfindung weist erfindungsgemäßes Oligomer (β') bzw. erfindungsgemäßes Polymer (β') ein mittleres Molekulargewicht M_{w} im Bereich von 2.000 bis 50.000 g/mol, bevorzugt 2.000 bis 25.000 g/mol auf, bestimmt beispielsweise durch GPC.

In einer Ausführungsform der vorliegenden Erfindung setzt man bei der Herstellung von erfindungsgemäßem Oligomer (β') bzw. erfindungsgemäßem Polymer (β') so viel Dicarbonsäure (a) bzw. Polycarbonsäure (a) einerseits und Alkohol (b) andererseits ein, dass das molare Verhältnis der alkoholischen OH-Gruppen zu den COOH-Gruppen im Bereich von 1 : 2 bis 2 : 1 liegt, bevorzugt 1 : 1,7 bis 1,7 : 1, insbesondere 1 : 1,7 bis 1,3 : 1. liegt. Dabei soll eine Dicarbonsäureanhydridgruppe wie zwei COOH-Gruppen zählen.

In einer Ausführungsform der vorliegenden Erfindung setzt man bei der Herstellung von erfindungsgemäßem Oligomer (β') bzw. erfindungsgemäßem Polymer (β') Alkohol (b) und Verbindung der allgemeinen Formel I in einem Molverhältnis im Bereich von 5 : 1 bis 1,5 : 1, bevorzugt 3 : 1 bis 1,5 : 1 und ganz besonders bevorzugt 2,5 : 1 bis 1,8 : 1 ein.

Ein weiterer Gegenstand der vorliegenden Erfindung sind Copolymere (B), im Rahmen der vorliegenden Erfindung auch erfindungsgemäße Copolymere (B) genannt, die hergestellt sind durch Umsetzung von
(α1) mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, insbesondere NH₂-Gruppen, oder
(α2) mindestens einem (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, insbesondere NH₂-Gruppen, mit
(β) mindestens einer oligomeren oder polymeren Verbindung, die wie vorstehend beschrieben charakterisiert ist. Besonders geeignete Beispiele für oligomere oder polymere Verbindungen (β) sind erfindungsgemäße oligomere oder polymere Verbindungen (β').

In einer Ausführungsform der vorliegenden Erfindung handelt es sich bei erfindungsgemäßem Copolymer (B) um eines, bei dem mindestens ein ethylenisch ungesättigtes Comonomer mit mindestens einer funktionellen Gruppe gewählt wird aus (Meth)acrylsäure und (Meth)acrylamid.

Ein weiterer Aspekt der vorliegenden Erfindung ist ein Verfahren zur Herstellung von erfindungsgemäßen Oligomeren (β') bzw. erfindungsgemäßen Polymeren (β'), kurz auch erfindungsgemäßes Herstellungsverfahren genannt. Das erfindungsgemäße Herstellungsverfahren ist dadurch gekennzeichnet, dass man
(a) mindestens eine ethylenisch ungesättigte Di- oder Polycarbonsäure oder ihr Anhydrid oder Ester mit
(b) mindestens einem mindestens trifunktionellen Alkohol und
(c) mindestens einer Verbindung der allgemeinen Formel I 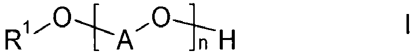 in der die Variablen wie folgt definiert sind:
   R¹ ist gewählt aus C₁-C₄-Alkyl,
   A ist gleich oder verschieden und gewählt aus C₂-C₆-Alkylen,
   n liegt im Bereich von 4 bis 40,
   sowie
(d) gegebenenfalls mindestens eine weitere Verbindung mit mindestens einer COOH-Gruppe oder mindestens einer alkoholischen OH-Gruppe pro Molekül,
miteinander umsetzt,
wobei mindestens trifunktioneller Alkohol (b) gewählt wird aus C₃-C₈-Triolen, die mit Alkylenoxid (e) alkoxyliert sind, wobei Alkylenoxid (e) gewählt wird aus C₃-C₆-Alkylenoxid.

Dabei sind ethylenisch ungesättigte Di- oder Polycarbonsäure (a), Alkohol (b), Verbindung der allgemeinen Formel I, Alkylenoxid (e) und optional eingesetzte Verbindung (d) wie vorstehend definiert. Dabei können bis zu 33 mol-% von Alkylenoxid (e) durch Ethylenoxid ersetzt sein.

Zur Herstellung von erfindungsgemäßem Oligomer (β') bzw. erfindungsgemäßem Polymer (β') kann man beispielsweise so vorgehen, dass man mindestens eine Dicarbonsäure (a) oder Polycarbonsäure (a), mindestens einen Alkohol (b), mindestens eine Verbindung der allgemeinen Formel I und gegebenenfalls eine weitere Verbindung (d) miteinander umsetzt.

In einer Ausführungsform der vorliegenden Erfindung setzt man bei der Herstellung von erfindungsgemäßem Oligomer (β') bzw. erfindungsgemäßem Polymer (β') so viel Dicarbonsäure (a) bzw. Polycarbonsäure (a) einerseits und so viel Alkohol (b) und Verbindung der allgemeinen Formel I andererseits ein, dass das molare Verhältnis der alkoholischen OH-Gruppen zu den COOH-Gruppen im Bereich von 1 : 2 bis 2 : 1 liegt, bevorzugt 1 : 1,7 bis 1,7 : 1, insbesondere 1 : 1,7 bis 1,3 : 1. Dabei soll eine Dicarbonsäureanhydridgruppe wie zwei COOH-Gruppen zählen.

Zur Herstellung von erfindungsgemäßem Oligomer (β') bzw. erfindungsgemäßem Polymer (β') kann man ohne Verwendung von Katalysatoren arbeiten. Vorzugsweise arbeitet man unter Verwendung mindestens eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH-Wert ≤ 6, insbesondere ≤ 5) und saures Aluminiumoxid zu nennen. Weiterhin sind beispielsweise Aluminiumverbindungen der allgemeinen Formel Al(OR²)₃ und Titanate der allgemeinen Formel Ti(OR²)₄ als saure anorganische Katalysatoren einsetzbar, wobei die Reste R² jeweils gleich oder verschieden sein können und unabhängig voneinander gewählt sind aus
C₁-C₁₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
und aus C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R² in Al(OR²)₃ bzw. Ti(OR²)₄ jeweils gleich und gewählt aus Isopropyl oder 2-Ethylhexyl.

Bevorzugte saure metallorganische Katalysatoren sind beispielsweise gewählt aus Dialkylzinnoxiden (R²)₂SnO, wobei R² wie oben stehend definiert ist. Ein bevorzugter Vertreter für saure metallorganische Katalysatoren ist Di-n-butylzinnoxid, das als sogenanntes Oxo-Zinn kommerziell erhältlich ist. Besonders gut geeignete saure metallorganische Katalysatoren sind Di-C₁-C₈-alkylderivate von Zinnsalzen aliphatischer Carbonsäuren wie Di-n-butylzinndiacetat oder Di-n-butylzinndilaurat. Außerdem sind Zinnsalze von organischen Säuren geeignet, beispielsweise Zinndiacetat, Zinndioctoat und Zinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,001 bis 10 Gew.-%, bevorzugt 0,02 bis 0,1 Gew.-% Katalysator ein, bezogen auf die Masse der insgesamt eingesetzten umzusetzenden Ausgangsmaterialien.

In einer anderen Variante kann man ein oder mehrere Enzyme als Katalysatoren einsetzen. Bevorzugt ist die Verwendung von Lipasen und Esterasen. Gut geeignete Lipasen und Esterasen sind Candida cylindracea, Candida lipolytica, Candida rugosa, Candida antarctica, Candida utilis, Chromobacterium viscosum, Geotrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an eingesetztem Enzym beträgt 1 bis 20 Gew.-%, insbesondere 10 bis 15 Gew.-%, bezogen auf die Masse der insgesamt eingesetzten umzusetzenden Ausgangsmaterialien.

Das erfindungsgemäße Herstellungsverfahren kann man in Gegenwart eines Lösemittels oder Lösemittelgemischs durchführen. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. LösemittelMengen von mehr als dem 100-fachen, bezogen auf die Masse an eingesetzten umzusetzenden Ausgangsmaterialien, sind in nicht vorteilhaft, weil bei deutlich niedrigeren Konzentrationen der Reaktionspartner die Reaktionsgeschwindigkeit deutlich nachlässt, was zu unwirtschaftlich langen Umsetzungsdauern führt.

In einer anderen Variante des erfindungsgemäßen Herstellungsverfahrens setzt man kein Lösemittel ein:

Zur Durchführung des erfindungsgemäßen Herstellungsverfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb mit einem Porendurchmesser von 4Ä, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen. Auch ist es möglich, gebildetes Wasser mit Hilfe eines geeigneten Lösungsmittels azeotrop abzudestillieren.

Wenn man statt freier Dicarbonsäure (a) oder Polycarbonsäure (a) oder Anhydriden einen Mono- oder Dicarbonsäure-C₁-C₄-Alkylester einsetzt, gilt für den während der Reaktion frei werdenden C₁-C₄-Alkohol sinngemäß das gleiche.

In einer Ausführungsform der vorliegenden Erfindung führt man das erfindungsgemäße Herstellungsverfahren unter Inertgasatmosphäre durch, das heißt beispielsweise unter Kohlendioxid, Stickstoff oder Edelgas, unter denen insbesondere Argon zu nennen ist.

In einer Ausführungsform der vorliegenden Erfindung führt man das erfindungsgemäße Herstellungsverfahren bei Temperaturen von 80 bis 220°C durch. Vorzugsweise arbeitet man bei Temperaturen von 130 bis 200°C, insbesondere bis 190°C oder darunter. Wünscht man als Katalysator ein oder mehrere Enzyme einzusetzen, so sollte die Reaktionstemperatur vorzugsweise 110°C, insbesondere 75°C nicht übersteigen.

Die Druckbedingungen des erfindungsgemäßen Herstellungsverfahrens sind an sich unkritisch. Man kann bei deutlich verringertem Druck arbeiten, beispielsweise bei 10 bis 500 mbar. Das erfindungsgemäße Herstellungsverfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Herstellungsverfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich erfindungsgemäße Oligomere (β') bzw. erfindungsgemäße Polymere (β') leicht isolieren, beispielsweise durch Abtrennen, insbesondere Abfiltrieren des gegebenenfalls eingesetzten Katalysators. Wenn man ein oder mehrere Lösemittel eingesetzt hat, so kann man im Anschluss an die eigentliche Umsetzung einengen, wobei man das Einengen üblicherweise bei vermindertem Druck durchführt. Flüchtige Nebenprodukte lassen sich beispielsweise durch Strippen, vorzugsweise durch Strippen mit Stickstoff, entfernen. Weitere gut geeignete Aufarbeitungsmethoden sind Ausfällen nach Zugabe von Wasser und anschließendes Waschen und Trocknen.

In einer anderen Ausführungsform der vorliegenden Verbindung verarbeitet man erfindungsgemäße Oligomere (β') bzw. erfindungsgemäße Polymere (β') ohne weitere Aufarbeitungsschritte weiter.

Ein weiterer Gegenstand der vorliegenden Erfindung ist die Verwendung von erfindungsgemäßen oligomeren oder polymeren Verbindungen (β') zur Herstellung von erfindungsgemäßen Copolymeren (B). Die Herstellung von erfindungsgemäßen Copolymeren (B), kurz auch erfindungsgemäßes Copolymerherstellungsverfahren genannt, kann man nach verschiedenen Methoden durchführen, die sich im Wesentlichen in der Reihenfolge der Zugabe der verschiedenen Copolymerbausteine unterscheiden.

In einer Variante des erfindungsgemäßen Copolymerherstellungsverfahrens kann man so vorgehen, dass man zunächst ein (Co)polymer (α2) herstellt, beispielsweise durch vorzugsweise radikalische (Co)polymerisation, und danach mit mindestens einer oligomeren oder polymeren Verbindung (β), bevorzugt mindestens einer erfindungsgemäßen oligomeren oder polymeren Verbindung (β') umsetzt. Dieser zweite Schritt kann beispielsweise radikalisch initiiert werden oder eine konzertierte Reaktion sein, beispielsweise eine En-Reaktion.

In einer anderen Variante des erfindungsgemäßen Copolymerherstellungsverfahrens kann man so vorgehen, dass man mindestens ein ethylenisch ungesättigtes Comonomer (α1) in Gegenwart von mindestens einer oligomeren oder polymeren Verbindung (β), bevorzugt mindestens einer erfindungsgemäßen oligomeren oder polymeren Verbindung (β') vorzugsweise radlkallsch polymerisiert.

In einer Ausführungsform der vorliegenden Erfindung stellt man erfindungsgemäßes Copolymer (B) durch radikalische Copolymerisation her, gewählt aus Massepolymerisation, Lösungs-, Gel-, Emulsions-, Dispersions- und Suspensions-Polymerisation. Als geeignet haben sich auch Varianten erwiesen, bei denen die Copolymerisation in wässriger Phase in umgekehrter Emulsion (inverse Emulsion) oder in inverser Suspension durchgeführt wird.

In einer Ausführungsform der vorliegenden Erfindung führt man die Copolymerisation zur Herstellung von erfindungsgemäßen Copolymeren (B) bei Temperaturen im Bereich von -20°C bis 150°C durch.

In einer Ausführungsform der vorliegenden Erfindung führt man das erfindungsgemäße Copolymerherstellungsverfahren adiabatisch durch. So kann man beispielsweise die Copolymerisation bei Temperaturen von +10°C oder darunter initiieren und beendet die Reaktion dann bei einer Temperatur von 80 bis 100°C.

In einer Variante des erfindungsgemäßen Copolymerherstellungsverfahrens startet man die Copolymerisation bei Temperaturen im Bereich von -20 bis +30°C, bevorzugt von -10 bis +20°C und insbesondere im Bereich von 0 bis 10°C.

In einer Ausführungsform der vorliegenden Erfindung startet man das erfindungsgemäße Copolymerherstellungsverfahren mit Hilfe von mindestens einem Initiator, einem anorganischen oder vorzugsweise organischen Peroxid. Beispiele für geeignete Peroxide sind Alkalimetallperoxodisulfate wie z. B. Natriumperoxodisulfat, Ammoniumperoxodisulfat, weiterhin Wasserstoffperoxid, organische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis-(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, Di-tert.-butylperoxid, tert.-Butylhydroperoxid, Cumolhydroperoxid, tert.-Butylperoxi-2-ethylhexanoat und Diisopropylperoxidicarbamat. Geeignet als Initiatoren sind auch Azoverbindungen wie beispielsweise Azobisisobutyronitril, Azobis(2-amidopropan)dihydrochlorid und 2,2'-Azobis(2-methylbutyronitril).

Redoxinitiatoren sind ebenfalls geeignet, beispielsweise aus Peroxid und oxidierbarer Schwefelverbindung. Ganz besonders bevorzugt sind Systeme aus Acetonbisulfit und organischem Peroxid wie tert.-C₄H₉-OOH, Na₂S₂O₅ (Natriumdisulfit) und organischem Peroxid wie tert.-C₄H₉-OOH oder HO-CH₂SO₂Na und organischem Peroxid wie tert.-C₄H₉-OOH. Auch sind Systeme wie beispielsweise Ascorbinsäure/H₂O₂ besonders bevorzugt.

Ganz besonders gut geeignet sind peroxidische Salze, beispielsweise Alkalimetallsalze von Peroxodisulfat, insbesondere K₂S₂O₈ und Na₂S₂O₈.

Die Druckbedingungen sind im Allgemeinen unkritisch, geeignet sind beispielsweise Drücke im Bereich von Normaldruck bis 10 bar.

Natürlich kann man der Reaktionsmischung weitere Zusatzstoffe beifügen, die in dem eingesetzten Verfahren üblich sind, im Falle einer Emulsionspolymerisation beispielsweise Glykole, Polyethylenglykole, Tenside, Emulgatoren, Schutzkolloide und Puffer/pH-Wert-Regulatoren.

Als Zeitdauer für die Emulsionspolymerisation kann man beispielsweise eine Zeitdauer im Bereich von 30 Minuten bis 12 Stunden wählen, bevorzugt sind 2 bis 5 Stunden.

Ein weiterer Aspekt der vorliegenden Erfindung ist die Verwendung von erfindungsgemäßen Copolymeren zur Blockierung unterirdischer Formationen bei der Förderung von fossilem Öl und/oder Gas. Ein weiterer Aspekt der vorliegenden Erfindung ist ein Verfahren zur Blockierung unterirdischer Formationen bei der Förderung von fossilem Öl und/oder Gas unter Verwendung von erfindungsgemäßen Copolymeren (B).

Das erfindungsgemäße Verfahren zur Blockierung unterirdischer Formationen bei der Förderung von fossilem Öl und/oder Gas kann man beispielsweise so durchführen, dass man in einem ersten Schritt in flüssigkeitsführende und poröse Gesteinsformationen Wasser absorbierende Partikel einbringt, bei denen es sich um Copolymer (B) handelt, und wobei die Partikel in der Wasser führenden Gesteinsformation durch Wasserabsorption den Flüssigkeitsfluss durch die Gesteinsschicht(en) unterbinden.

In einer Ausführungsform der vorliegenden Erfindung können die Partikel von Copolymer (B) einen mittleren Durchmesser im Bereich von 0,5 bis 1000 µm, bevorzugt von 1 bis 200 µm und besonders bevorzugt von 10 bis 100 µm aufweisen.

Das Einbringen kann beispielsweise in einem nicht-wässrigen Medium oder in einer stark salzhaltigen wässrigen Lösung, beispielsweise in einer mindestens 20 Gew.-% CaCl₂-Lösung durchgeführt werden.

Die Erfindung wird durch Beispiele erläutert.

### Allgemeine Anmerkungen:

Die Molekulargewichte wurden durch Gelpermeationschromatographie (GPC) bestimmt (Eluent: THF. Standard: PMMA). Die Säurezahl wurde jeweils nach DIN 53402 bestimmt.

Unter TMP·x PO wird mit x mol Propylenoxid alkoxyliertes Trimethylolpropan verstanden, wobei x ein Mittelwert (Zahlenmittel) sein kann. Unter Glycerin·x PO wird dementsprechend mit x mol Propylenoxid alkoxyliertes Glycerin verstanden.
Angaben in % beziehen sich auf Gew.-%, wenn nicht ausdrücklich anders angegeben.

### I. Herstellung von erfindungsgemäßen oligomeren bzw. polymeren Verbindungen (β')

### I.1 Herstellung von erfindungsgemäßer Verbindung (β'.1)

### Molverhältnis (a.1) : (b.1) : (c.1) wie 4 : 2 : 1

In einem 1-I-Rundkolben mit Wasserauskreiser wurden 100,0 g (1,02 mol) Maleinsäureanhydrid (a.1), 101,9 g (0,51 mol) Typ·1,2 PO (b.1) und 127,4 g (0,25 mol) Polyethylenglykolmonomethylether (Mₙ = 500 g/mol) (c.1) miteinander vermischt. Nach Zugabe von einem Tropfen (0,02 g) Di-n-butylzinndilaurat wurde auf 190 °C erhitzt und drei Stunden bei 190°C gerührt. Danach kühlte man auf Zimmertemperatur ab. Man erhielt erfindungsgemäße Verbindung (β'.1) in Form eines hellgelben Harzes.
Säurezahl = 78 mg KOH/g
Mₙ = 930 g/mol, M_{w} = 5900 g/mol

### 1.2 Herstellung von erfindungsgemäßer Verbindung (β'.2)

### Molverhältnis (a.1) : (b.2) : (c.1) wie 4 : 2 : 1

In einem 1-I-Rundkolben mit Wasserauskreiser wurden 100,0 g (1,02 mol) Maleinsäureanhydrid (a.1), 107,0 g (0,51 mol) Glycerin·2,0 PO (b.2) und 127,4 g (0,25 mol) Polyethylenglykolmonomethylether (Mₙ = 500 g/mol) (c.1) miteinander vermischt. Nach Zugabe von 1 Tropfen (0,02 g) Di-n-butylzinndilaurat wurde auf 190 °C erhitzt und 3,5 Stunden bei 190°C gerührt. Danach kühlte man auf Zimmertemperatur ab. Man erhielt erfindungsgemäße Verbindung (β'.2) in Form eines hellgelben Harzes.
Säurezahl = 78 mg KOH/g
Mₙ = 930 g/mol, M_{w} = 4650 g/mol

### I.3 Herstellung von erfindungsgemäßer Verbindung (β'.3)

### Molverhältnis (a.1) : (b.1) : (c.1) : (d.1) wie 2 : 0,8 : 0,5 : 0,3

In einem 1-I-Rundkolben mit Wasserauskreiser wurden 180,0 g (1,84 mol) Maleinsäureanhydrid (a.1), 146,8 g (0,73 mol) Typ·1,2 PO (b.1), 229,4 g (0,46 mol) Polyethylen-glykolmonomethylether (Mₙ = 500 g/mol) (c.1) und 28,7 g (0,28 mol) Neopentylglykol (d.1) miteinander vermischt. Nach Zugabe von 1 Tropfen Di-n-butylzinndilaurat wurde auf 190 °C erhitzt und zwei Stunden bei 190°C gerührt. Danach kühlte man auf Zimmertemperatur ab. Man erhielt erfindungsgemäße Verbindung (β'.3) in Form eines hellgelben Harzes.
Säurezahl = 86 mg KOH/g
Mₙ = 920 g/mol, M_{w} = 4190 g/mol

### I.4 Herstellung von erfindungsgemäßer Verbindung (β'.4)

### Molverhältnis (a.1) : (b.1) : (c.1) : (b.3) wie 2 : 0,8 : 0,5 : 0,2

In einem 1-I-Rundkolben mit Wasserauskreiser wurden 180,0 g (1,84 mol) Maleinsäureanhydrid (a.1), 146,7 g (0,73 mol) Typ·1,2 PO (b.1), 229,2 g (0,46 mol) Polyethylen-glykolmonomethylether (Mₙ = 500 g/mol) (c.1) und 24,6 g (0,18 mol) TMP (b.3) miteinander vermischt. Nach Zugabe von 2 Tropfen Di-n-butylzinndilaurat wurde auf 190 °C erhitzt und 3 Stunden bei 190°C gerührt. Danach kühlte man auf Zimmertemperatur ab. Man erhielt erfindungsgemäße Verbindung (β'.4) in Form eines hellgelben Harzes.
Säurezahl = 60 mg KOH/g
Mₙ = 1000 g/mol, M_{w} = 7770 g/mol

### 1.5 Herstellung von erfindungsgemäßer Verbindung (β'.5)

### Molverhältnis (a.1) : (b.1) : (c.2) = 4 : 2 : 1

In einem 1-I-Rundkolben mit Wasserauskreiser wurden 150,0 g (1,53 mol) Maleinsäureanhydrid (a.1), 151,5 g (0,76 mol) TMP·1,2 PO (b.1) und 382,2 g (0,38 mol) Polyethylenglykolmonomethylether (Mₙ = 1000 g/mol) (c.2) miteinander vermischt. Nach Zugabe von einem Tropfen (0,02 g) Di-n-butylzinndilaurat wurde auf 190 °C erhitzt und drei Stunden bei 190°C gerührt. Danach kühlte man auf Zimmertemperatur ab. Man erhielt erfindungsgemäße Verbindung (β'.5) in Form eines hellgelben Harzes.
Säurezahl = 72 mg KOH/g
Mₙ = 1270 g/mol, M_{w} = 3950 g/mol

### II. Herstellung von erfindungsgemäßen Copolymeren (B)

Es werden die folgenden Abkürzungen verwendet:
Na-AMPS = 2-Acrylamido-2-methylpropansulfonsäure Natriumsalz
MbA = N,N'-Methylenbisacrylamid
HPA = Hydroxypropylacrylat (Isomerengemisch)

### II.1 Herstellung von erfindungsgemäßem Copolymer (B.1)

### Copolymer aus Na-AMPS und Acrylamid mit MbA und (β'.4)

In einem 2-I-Dreihalskolben mit Rührer und Thermometer wurden 148,8 g Wasser vorgelegt und anschließend nacheinander 352,5 g (0,74 mol, 27 mol-%) Na-AMPS (50 Gew.-% Lösung in Wasser), 286,4 g (2,0 mol, 70 Mol-%) Acrylamid (α1.1), als 50 Gew.-% Lösung in Wasser, 11,2 g erfindungsgemäße Verbindung (β'.4) und 0,3 g (0,0021 mol, 0,08 Mol-%) MbA zugesetzt. Man stellte mit 20 Gew.-% wässriger Natronlauge einen pH-Wert von 7 ein und spülte dreißig Minuten mit Stickstoff. Danach wurde auf ca. 5 °C abgekühlt. Die Lösung wurde in einen Plastikbehälter mit den Maßen (Breite · Tiefe · Höhe) 15 cm·10 cm·20 cm umgefüllt und anschließend wurden nacheinander 16 g einer 1 Gew.-% wässrigen 2,2'-Azo-bis-(2-amidinopropan)-dihydrochlorid Lösung, 20 g einer 1 Gew.-% wässrigen Na₂S₂O₈-Lösung, 0,7 g einer 1 Gew.-% wässrigen
HO-CH₂SO₂Na-Lösung, 16,2 g einer 0,1 % wässrigen tert.-Butylhydroperoxid-Lösung und 2,5 g einer 0,1 Gew.-% wässrigen FeSO₄·7 H₂O-Lösung zugesetzt. Die Copolymerisation wurde durch Bestrahlen mit UV-Licht (zwei Philips Röhren; Cleo Performance 40 W) gestartet. Nach zwei Stunden nahm man erfindungsgemäßes Copolymer (B.1) in Form eines erhärteten Gels aus dem Plastikbehälter und schnitt es mit einer Schere in Würfel einer Kantenlänge von ca. 5 cm. Man bestrich die Würfel mit einem Trennmittel von mit Wasser im Verhältnis 1 : 20 verdünnten Sitren® 595 (Polydimethylsiloxan-Emulsion; Firma Goldschmidt) und zerkleinerte sie mit Hilfe eines Fleischwolfs. Man erhielt ein Gelgranulat von erfindungsgemäßem Copolymer (B.1).

Das Gelgranulat von erfindungsgemäßem Copolymer (B.1) wurde gleichmäßig auf Trockengitter verteilt und in einem Umlufttrockenschrank bei 100 bis120°C bis zur Gewichtskonstanz getrocknet. Man erhielt ca. 300 g eines weißen, harten Granulats, welches mit Hilfe einer Zentrifugalmühle in einen pulverförmigen Zustand überführt wurde. Der mittlere Teilchendurchmesser des Pulvers betrug 30 bis 50 µm und der Anteil an Partikeln, die ein Sieb der Maschengröße 63 µm nicht passieren, war kleiner als 2 Gew.-%.

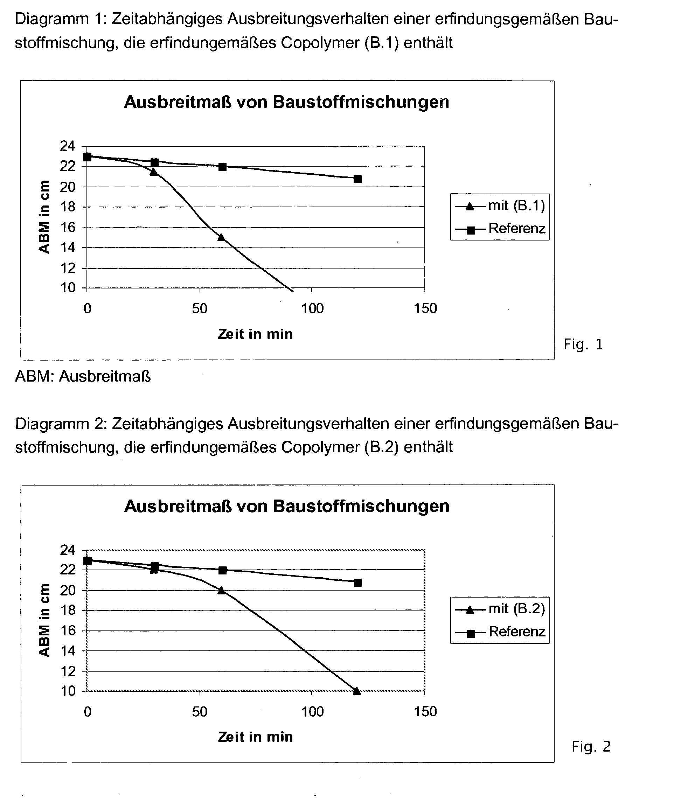

Die Überprüfung des zeitabhängigen Verhaltens in einer Baustoffmischung wurde wie folgt durchgeführt:
Man mischte in einem Rilem-Mischer nach DIN EN 196 1350 g Normsand und 450 g Zement. Anschließend gab man 275 g Wasser zu, so dass sich ein Ausbreitmaß von 23 cm ergab. Man ging weiter nach DIN EN 196 vor und bestimmte das zeitabhängige Ausbreitmaß. Das zeitabhängige Ausbreitmaß ist als Referenz angegeben.
Man mischte in einem 1-I-Eimer 1350 g Normsand, 0,9 g pulverförmiges erfindungsgemäßes Copolymer (B.1) und 450 g Zement. Anschließend gab man 275 g Wasser zu. Anschließend wurde das Ausbreitmaß über zwei Stunden beobachtet. Die Ergebnisse findet man in Diagramm 1.

### II.2 Herstellung von erfindungsgemäßem Copolymer (B.2)

### Copolymer aus Acrylamid, HPA mit Pentaerythrittriallylether und erfindungsgemäßer Verbindung (β'.5),

In einem 2-I-Dreihalskolben mit Rührer und Thermometer wurden 141,8 g Wasser vorgelegt und anschließend nacheinander 313,76 g (2,21 mol, 83,1 mol-%) Acrylamid (α1.1) als 50 Gew.-% Lösung in Wasser, 58,32 g HPA (0,448 mol, 16,8 mol-%), 0,32 g Pentaerythrittriallylether ((0,00125 mol, 0,1 mol-%) sowie 11,2 g erfindungsgemäße Verbindung (β'.5) und 0,3 g (0,0021 mol, 0,08 mol-%) MbA zugesetzt. Man stellte mit 20 Gew.-% wässriger Natronlauge einen pH-Wert von 5 ein und spülte dreißig Minuten mit Stickstoff. Danach wurde auf ca. 5 °C abgekühlt. Die Lösung wurde in einen Plastikbehälter mit den Maßen (Breite · Tiefe · Höhe) 15cm·10 cm·20 cm umgefüllt und anschließend wurden nacheinander 16 g einer 1 Gew.-% wässrigen 2,2'-Azo-bis-(2amidinopropan)-dihydrochlorid Lösung, 20 g einer 1 Gew.-% wässrigen Na₂S₂O₈-Lösung, 0,7 g einer 1 Gew.-% wässrigen HO-CH₂SO₂Na-Lösung, 16,2 g einer 0,1 % wässrigen tert.-Butylhydroperoxid-Lösung und 2,5 g einer 0,1 Gew.-% wässrigen FeSO₄·7 H₂O-Lösung zugesetzt. Die Copolymerisation wurde durch Bestrahlen mit UV-Licht (zwei Philips Röhren; Cleo Performance 40 W) gestartet. Nach zwei Stunden nahm man erfindungsgemäßes Copolymer (B.2) in Form eines erhärteten Gels aus dem Plastikbehälter und schnitt es mit einer Schere in Würfel einer Kantenlänge von ca. 5 cm. Man bestrich die Würfel mit einem Trennmittel von mit Wasser im Verhältnis 1 : 20 verdünnten Sitzen® 595 (Polydimethylsiloxan-Emulsion; Firma Goldschmidt) und zerkleinerte sie mit Hilfe eines Fleischwolfs. Man erhielt ein Gelgranulat von erfindungsgemäßem Copolymer (B.2).

Das Gelgranulat von erfindungsgemäßem Copolymer (B.2) wurde gleichmäßig auf Trockengitter verteilt und in einem Umlufttrockenschrank bei 100 bis120°C bis zur Gewichtskonstanz getrocknet. Man erhielt ca. 300 g eines weißen, harten Granulats, welches mit Hilfe einer Zentrifugalmühle in einen pulverförmigen Zustand überführt wurde. Der mittlere Teilchendurchmesser des Pulvers betrug 30 bis 50 µm und der Anteil an Partikeln, die ein Sieb der Maschengröße 63 µm nicht passieren, war kleiner als 2 Gew.-%.

Die Überprüfung des zeitabhängigen Verhaltens in einer Baustoffmischung wurde wie bei erfindungsgemäßem Copolymer (B.2) durchgeführt. Die Ergebnisse findet man in Diagramm 2.

## Patentansprüche

1. Mischung, enthaltend
(A) mindestens ein hydraulisches oder latent hydraulisches Bindemittel,
(B) mindestens ein Copolymer, erhältlich durch Umsetzung von
(α1) mindestens einem ethylenlsch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, oder
(α2) mindestens einem (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, mit
(β) mindestens einer oligomeren oder polymeren Verbindung, erhältlich durch Umsetzung von
(a) mindestens einer ethylenisch ungesättigten Di- oder Polycarbonsäure oder ihrem Anhydrid oder Ester mit
(b) mindestens einem mindestens trifunktionellen Alkohol und
(c) mindestens einer Verbindung der allgemeinen Formel I 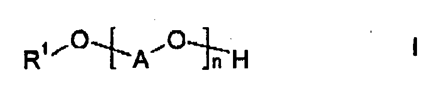 in der die Variablen wie folgt definiert sind:
R¹ ist gewählt aus C₁-C₄-Alkyl,
A ist gleich oder verschieden und gewählt aus C₂-C₆-Alkylen,
n liegt im Bereich von 4 bis 40, und
(d) gegebenenfalls mindestens einer weiteren Verbindung mit mindestens einer COOH-Gruppe oder mindestens einer alkoholischen OH-Gruppe pro Molekül.

2. Mischung nach Anspruch 1, **dadurch gekennzeichnet, dass** hydraulisches bzw. latent hydraulisches Bindemittel (A) gewählt wird aus Zement, Kalk, Gips, Halbhydrat, Anhydrit, Flugasche, Puzzolan, Trass und Hochofenschlacke.

3. Mischung nach Anspruch 1 oder 2, **dadurch gekennzeichnet, dass** ethylenisch ungesättigte Di- oder Polycarbonsäure (a) gewählt wird aus C₄-C₁₀-Dicarbonsäuren mit einer C-C-Doppelbindung pro Molekül oder ihren Anhydriden oder ihren Estern.

4. Mischung nach einem der Ansprüche 1 bis 3, **dadurch gekennzeichnet, dass** mindestens trifunktioneller Alkohol (b) gewählt wird aus C₃-C₈-Triolen, die mit Alkylenoxid (e) alkoxyliert sein können, wobei Alkylenoxid (e) gewählt wird aus C₃-C₆-Alkylenoxid.

5. Mischung nach einem der Ansprüche 1 bis 4, **dadurch gekennzeichnet, dass** mindestens trifunktioneller Alkohol (b) gewählt wird aus C₃-C₈-Triolen, alkoxyliert mit Alkylenoxid (e), wobei Alkylenoxid (e) gewählt wird aus Propylenoxid und Butylenoxid.

6. Mischung nach einem der Ansprüche 1 bis 5, **dadurch gekennzeichnet, dass** mindestens trifunktioneller Alkohol (b) gewählt wird aus C₃-C₈-Triolen, alkoxyliert mit Alkylenoxid (e), wobei bis zu 33 mol% von Alkylenoxid (e) ersetzt sind durch Ethylenoxid.

7. Mischung nach einem der Ansprüche 1 bis 6, **dadurch gekennzeichnet, dass** mindestens trifunktioneller Alkohol (b) gewählt wird aus C₃-C₈-Triolen, alkoxyliert mit 1 bis 30 mol C₃-C₅-Alkylenoxid (e) pro mol mindestens trifunktionellem Alkohol (b), wobei Alkylenoxid (e) gewählt wird aus C₃-C₆-Alkylenoxid.

8. Mischung nach einem der Ansprüche 1 bis 7, **dadurch gekennzeichnet, dass** das Gewichtsverhältnis von Bindemittel (A) zu Copolymer (B) mindestens 98:2 beträgt.

9. Mischung nach einem der Ansprüche 1 bis 8, **dadurch gekennzeichnet, dass** Verbindung (d) gewählt wird aus aliphatischen Diolen mit 2 bis 10 C-Atomen.

10. Mineralischer Baustoff, enthaltend Wasser und mindestens eine Mischung nach einem der Ansprüche 1 bis 9.

11. Verwendung von Mischungen nach einem der Ansprüche 1 bis 9 oder von mineralischen Baustoffen nach Anspruch 10 zum Herstellen von Bauwerken.

12. Oligomere oder polymere Verbindung (β'), erhältlich durch Umsetzung von
(a) mindestens einer ethylenisch ungesättigten Di- oder Polycarbonsäure oder ihrem Anhydrid oder Ester mit
(b) mindestens einem mindestens trifunktionellen Alkohole und
(c) mindestens einer Verbindung der allgemeinen Formel I 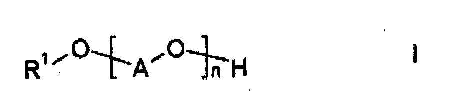 in der die Variablen wie folgt definiert sind:
R¹ ist gewählt aus C₁-C₄-Alkyl,
A ist gleich oder verschieden und gewählt aus C₂-C₆-Alkylen,
n liegt im Bereich von 4 bis 40, und
(d) gegebenenfalls mindestens einer weiteren Verbindung mit mindestens einer COOH-Gruppe oder mindestens einer alkoholischen OH-Gruppe pro Molekül,
wobei mindestens trifunktioneller Alkohol (b) gewählt wird aus C₃-C₈-Triolen, die mit Alkylenoxid (e) alkoxyliert sind, wobei Alkylenoxid (e) gewählt wird aus C₃-C₆-Alkylenoxid.

13. Oligomere oder polymere Verbindung (β') gemäß Anspruch 12, **dadurch gekennzeichnet, dass** mindestens trifunktioneller Alkohol (b) gewählt wird aus C₃-C₈-Triolen, alkoxyliert mit 1 bis 30 mol C₃-C₈-Alkylenoxid (e) pro mol mindestens trifunktionellem Alkohol (b).

14. Oligomere oder polymere Verbindung (β') gemäß Anspruch 12 oder 13, **dadurch gekennzeichnet, dass** bis zu 33 mol-% von Alkylenoxid (e) ersetzt sind durch Ethylenoxid.

15. Copolymer (B), erhältlich durch Umsetzung von
(α1) mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, oder
(α2) mindestens einem (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, mit
(β) mindestens einer oligomeren oder polymeren Verbindung, erhältlich durch Umsetzung von
(a) mindestens einer ethylenisch ungesättigten Di- oder Polycarbonsäure oder ihrem Anhydrid oder Ester mit
(b) mindestens einem mindestens trifunktionellen Alkohol und
(c) mindestens einer Verbindung der allgemeinen Formel I 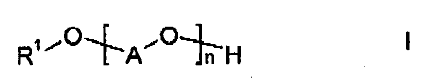 in der die Variablen wie folgt definiert sind:
R¹ ist gewählt aus C₁-C₄-Alkyl,
A ist gleich oder verschieden und gewählt.aus C₂-C₆-Alkylen,
n liegt im Bereich von 4 bis 40, und
(d) gegebenenfalls mindestens einer weiteren Verbindung mit mindestens einer COOH-Gruppe oder mindestens einer alkoholischen OH-Gruppe pro Molekül.

16. Copolymer (B) nach Anspruch 15, **dadurch gekennzeichnet, dass** ethylenisch ungesättigtes Comonomere mit mindestens einer funktionellen Gruppe (α1) gewählt wird aus (Meth)acrylsäure und (Meth)acrylamid.

17. Verfahren zur Herstellung von oligomeren oder polymeren Verbindungen (β') nach einem der Ansprüche 12 bis 14, **dadurch gekennzeichnet, dass** man
(a) mindestens eine ethylenisch ungesättigte Di- oder Polycarbonsäure oder ihr Anhydrid oder Ester mit
(b) mindestens einem mindestens trifunktionellen Alkohol und
(c) mindestens einer Verbindung der allgemeinen Formel I 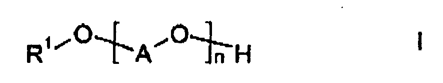 in der die Variablen wie folgt definiert sind:
R¹ ist gewählt aus C₁-C₄-Alkyl,
A ist gleich oder verschieden und gewählt aus C₂-C₆-Alkylen,
n liegt im Bereich von 4 bis 40,
sowie
(d) gegebenenfalls mindestens eine weitere Verbindung mit mindestens einer COOH-Gruppe oder mindestens einer alkoholischen OH-Gruppe pro Molekül,
miteinander umsetzt, wobei mindestens trifunktioneller Alkohol (b) gewählt wird aus C₃-C₈-Triolen, die mit Alkylenoxid (e) alkoxyliert sind, wobei Alkylenoxid (e) gewählt wird aus C₃-C₆-Alkylenoxid.

18. Verwendung von oligomeren oder polymeren Verbindungen (β') nach einem der Ansprüche 12 bis 14 zur Herstellung von Copolymeren (B) nach Anspruch 15 oder 16.

19. Verfahren zur Herstellung von Copolymeren (B) nach Anspruch 15 oder 16, **dadurch gekennzeichnet, dass** man zunächst ein (Co)polymer von mindestens einem ethylenisch ungesättigten Comonomer mit mindestens einer funktionellen Gruppe, gewählt aus COOH-Gruppen, Sulfonsäuregruppen, Nitrilgruppen, Hydroxyalkylgruppen und Aminogruppen, herstellt und danach mit mindestens einer oligomeren oder polymeren Verbindung (β') umsetzt.

20. Verfahren zur Herstellung von Copolymeren (B) nach Anspruch 15 oder 16, **dadurch gekennzeichnet, dass** man
(α2) mindestens ein ethylenisch ungesättigtes Comonomer mit mindestens einer funktionellen Gruppe, gewählt aus COOH-Gruppen, Sulfonsäuregruppen, Nitrilgruppen, Hydroxyalkylgruppen und Aminogruppen in Gegenwart von
(β) mindestens einer oligomeren oder polymeren Verbindung radikalisch polymerisiert.

21. Verwendung der Copolymere (B) nach Ansprüchen 15 oder 16 zur Blockierung unterirdischer Formationen bei der Förderung von fossilem Öl und/oder Gas.

## Claims

1. A mixture comprising
(A) at least one hydraulic or latently hydraulic binder,
(B) at least one copolymer obtainable by reacting
(α1) at least one ethylenically unsaturated comonomer having at least one functional group selected from COOH groups, sulfonic acid groups, nitrile groups, hydroxyalkyl groups and amino groups, or
(α2 ) at least one (co)polymer of at least one ethylenically unsaturated comonomer having at least one functional group selected from COOH groups, sulfonic acid groups, nitrile groups, hydroxyalkyl groups and amino groups, with
(β) at least one oligomeric or polymeric compound obtainable by reacting
(a) at least one ethylenically unsaturated dior polycarboxylic acid or anhydride or ester thereof with
(b) at least one at least trifunctional alcohol and
(c) at least one compound of the general formula I 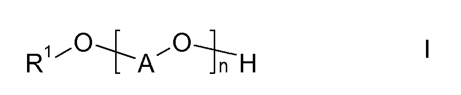 in which the variables are each defined as follows:
R¹ is selected from C₁-C₄-alkyl,
A is the same or different and is selected from C₂-C₆-alkylene,
n is in the range from 4 to 40, and
(d) optionally at least one further compound having at least one COOH group or at least one alcoholic OH group per molecule.

2. The mixture according to claim 1, wherein hydraulic or latently hydraulic binder (A) is selected from cement, lime, gypsum, hemihydrate, anhydrite, fly ash, pozzolan, tuff and furnace slag.

3. The mixture according to claim 1 or 2, wherein ethylenically unsaturated di- or polycarboxylic acid (a) is selected from C₄-C₁₀-dicarboxylic acids with one C-C double bond per molecule or anhydrides thereof or esters thereof.

4. The mixture according to any one of claims 1 to 3, wherein at least trifunctional alcohol (b) is selected from C₃-C₈-triols which may be alkoxylated with alkylene oxide (e), which alkylene oxide (e) is selected from C₃-C₆-alkylene oxide.

5. The mixture according to any one of claims 1 to 4, wherein at least trifunctional alcohol (b) is selected from C₃-C₈-triols alkoxylated with alkylene oxide (e), which alkylene oxide (e) is selected from propylene oxide and butylene oxide.

6. The mixture according to any one of claims 1 to 5, wherein at least trifunctional alcohol (b) is selected from C₃-C₈-triols alkoxylated with alkylene oxide (e), where up to 33 mol% of alkylene oxide (e) is replaced by ethylene oxide.

7. The mixture according to any one of claims 1 to 6, wherein at least trifunctional alcohol (b) is selected from C₃-C₈-triols alkoxylated with 1 to 30 mol of C₃-C₆-alkylene oxide (e) per mole of at least trifunctional alcohol (b), which alkylene oxide (e) is selected from C₃-C₆-alkylene oxide.

8. The mixture according to any one of claims 1 to 7, wherein the weight ratio of binder (A) to copolymer (B) is at least 98:2.

9. The mixture according to any one of claims 1 to 8, wherein compound (d) is selected from aliphatic diols having 2 to 10 carbon atoms.

10. A mineral construction material comprising water and at least one mixture according to any one of claims 1 to 9.

11. The use of mixtures according to any one of claims 1 to 9 or of mineral construction materials according to claim 10 for producing built structures.

12. An oligomeric or polymeric compound (β') obtainable by reacting
(a) at least one ethylenically unsaturated di- or polycarboxylic acid or anhydride or ester thereof with
(b) at least one at least trifunctional alcohol and
(c) at least one compound of the general formula I 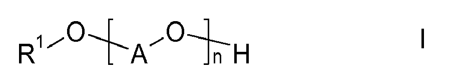 in which the variables are each defined as follows:
R¹ is selected from C₁-C₄-alkyl,
A is the same or different and is selected from C₂-C₆-alkylene,
n is in the range from 4 to 40, and
(d) optionally at least one further compound having at least one COOH group or at least one alcoholic OH group per molecule,
where at least trifunctional alcohol (b) is selected from C₃-C₈-triols alkoxylated with alkylene oxide (e), which alkylene oxide (e) is selected from C₃-C₆-alkylene oxide.

13. An oligomeric or polymeric compound (β') according to claim 12, wherein at least trifunctional alcohol (b) is selected from C₃-C₈-triols alkoxylated with 1 to 30 mol of C₃-C₆-alkylene oxide (e) per mole of at least trifunctional alcohol (b).

14. An oligomeric or polymeric compound (β') according to claim 12 or 13, wherein up to 33 mol% of alkylene oxide (e) is replaced by ethylene oxide.

15. A copolymer (B) which is obtainable by reacting
(α1) at least one ethylenically unsaturated comonomer having at least one functional group selected from COOH groups, sulfonic acid groups, nitrile groups, hydroxyalkyl groups and amino groups, or
(α2) at least one (co)polymer of at least one ethylenically unsaturated comonomer having at least one functional group selected from COOH groups, sulfonic acid groups, nitrile groups, hydroxyalkyl groups and amino groups, with
(β) at least one oligomeric or polymeric compound obtainable by reacting
(a)at least one ethylenically unsaturated di- or polycarboxylic acid or anhydride or ester thereof with
(b)at least one at least trifunctional alcohol and
(c)at least one compound of the general formula I 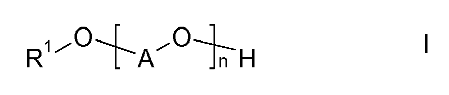 in which the variables are each defined as follows:
R¹ is selected from C₁-C₄-alkyl,
A is the same or different and is selected from C₂-C₆-alkylene,
n is in the range from 4 to 40, and
(d)optionally at least one further compound having at least one COOH group or at least one alcoholic OH group per molecule.

16. A copolymer (B) according to claim 15, wherein ethylenically unsaturated comonomer having at least one functional group (α1) is selected from (meth)acrylic acid and (meth)acrylamide.

17. A process for preparing oligomeric or polymeric compounds (β') according to any one of claims 12 to 14, which comprises reacting
(a) at least one ethylenically unsaturated dior polycarboxylic acid or anhydride or ester thereof with
(b) at least one at least trifunctional alcohol and
(c) at least one compound of the general formula I 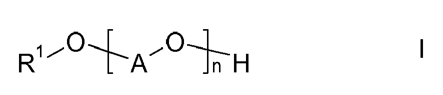 in which the variables are each defined as follows:
R¹ is selected from C₁-C₄-alkyl,
A is the same or different and is selected from C₂-C₆-alkylene,
n is in the range from 4 to 40,
and
(d) optionally at least one further compound having at least one COOH group or at least one alcoholic OH group per molecule,
with one another, where at least trifunctional alcohol (b) is selected from C₃-C₈-triols alkoxylated with alkylene oxide (e), which alkylene oxide (e) is selected from C₃-C₆-alkylene oxide.

18. The use of oligomeric or polymeric compounds (β') according to any one of claims 12 to 14 for preparing copolymers (B) according to claim 15 or 16.

19. A process for preparing copolymers (B) according to claim 15 or 16, which comprises first preparing a (co)polymer of at least one ethylenically unsaturated comonomer having at least one functional group selected from COOH groups, sulfonic acid groups, nitrile groups, hydroxyalkyl groups and amino groups, and then reacting it with at least one oligomeric or polymeric compound (β').

20. A process for preparing copolymers (B) according to claim 15 or 16, wherein
(α2) at least one ethylenically unsaturated comonomer having at least one functional group selected from COOH groups, sulfonic acid groups, nitrile groups, hydroxyalkyl groups and amino groups is free-radically polymerized in the presence of
(β) at least one oligomeric or polymeric compound.

21. The use of the copolymers (B) according to claim 15 or 16 for blocking underground formations in the extraction of fossil oil and/or gas.

## Revendications

1. Mélange, contenant :
(A) au moins un liant hydraulique ou hydraulique latent,
(B) au moins un copolymère pouvant être obtenu par mise en réaction de
(α1) au moins un comonomère éthyléniquement insaturé contenant au moins un groupe fonctionnel choisi parmi les groupes COOH, les groupes acide sulfonique, les groupes nitrile, les groupes hydroxyalkyle et les groupes amino, ou
(α2) au moins un (co)polymère d'au moins un comonomère éthyléniquement insaturé contenant au moins un groupe fonctionnel choisi parmi les groupes COOH, les groupes acide sulfonique, les groupes nitrile, les groupes hydroxyalkyle et les groupes amino, avec
(β) au moins un composé oligomère ou polymère, pouvant être obtenu par mise en réaction de
(a) au moins un acide di- ou polycarboxylique éthyléniquement insaturé ou son anhydride ou ester, avec
(b) au moins un alcool au moins trifonctionnel, et
(c) au moins un composé de formule générale I 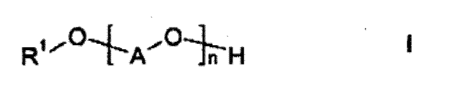 dans laquelle les variables sont définies de la manière suivante :
R¹ est choisi parmi les alkyles en C₁-C₄,
les A sont identiques ou différents et sont choisis parmi les alkylènes en C₂-C₆,
n se situe dans la plage allant de 4 à 40, et
(d) éventuellement au moins un autre composé contenant au moins un groupe COOH ou au moins un groupe OH alcoolique par molécule.

2. Mélange selon la revendication 1, **caractérisé en ce que** le liant hydraulique ou hydraulique latent (A) est choisi parmi le ciment, la chaux, le gypse, le semi-hydrate, l'anhydrite, les cendres volantes, la pouzzolane, le trass et le laitier de haut fourneau.

3. Mélange selon la revendication 1 ou 2, **caractérisé en ce que** l'acide di- ou polycarboxylique éthyléniquement insaturé (a) est choisi parmi les acides dicarboxyliques en C₄-C₁₀ contenant une double liaison C-C par molécule ou leurs anhydrides ou leurs esters.

4. Mélange selon l'une quelconque des revendications 1 à 3, **caractérisé en ce que** l'alcool au moins trifonctionnel (b) est choisi parmi les triols en C₃-C₈, qui peuvent être alcoxylés avec de l'oxyde d'alkylène (e), l'oxyde d'alkylène (e) étant choisi parmi les oxydes d'alkylène en C₃-C₆.

5. Mélange selon l'une quelconque des revendications 1 à 4, **caractérisé en ce que** l'alcool au moins trifonctionnel (b) est choisi parmi les triols en C₃-C₈, alcoxylés avec un oxyde d'alkylène (e), l'oxyde d'alkylène (e) étant choisi parmi l'oxyde de propylène et l'oxyde de butylène.

6. Mélange selon l'une quelconque des revendications 1 à 5, **caractérisé en ce que** l'alcool au moins trifonctionnel (b) est choisi parmi les triols en C₃-C₈, alcoxylés avec un oxyde d'alkylène (e), jusqu'à 33 % en moles de l'oxyde d'alkylène (e) étant remplacé par de l'oxyde d'éthylène.

7. Mélange selon l'une quelconque des revendications 1 à 6, **caractérisé en ce que** l'alcool au moins trifonctionnel (b) est choisi parmi les triols en C₃-C₈, alcoxylés avec 1 à 30 moles d'un oxyde d'alkylène en C₃-C₆ (e) par mole d'alcool au moins trifonctionnel (b), l'oxyde d'alkylène (e) étant choisi parmi les oxydes d'alkylène en C₃-C₆.

8. Mélange selon l'une quelconque des revendications 1 à 7, **caractérisé en ce que** le rapport en poids entre le liant (A) et le copolymère (B) est d'au moins 98:2.

9. Mélange selon l'une quelconque des revendications 1 à 8, **caractérisé en ce que** le composé (d) est choisi parmi les diols aliphatiques contenant 2 à 10 atomes C.

10. Matériau minéral, contenant de l'eau et au moins un mélange selon l'une quelconque des revendications 1 à 9.

11. Utilisation de mélanges selon l'une quelconque des revendications 1 à 9 ou de matériaux minéraux selon la revendication 10 pour la fabrication d'ouvrages.

12. Composé oligomère ou polymère (β'), pouvant être obtenu par mise en réaction de
(a) au moins un acide di- ou polycarboxylique éthyléniquement insaturé ou son anhydride ou ester avec
(b) au moins un alcool au moins trifonctionnel et
(c) au moins un composé de formule générale I 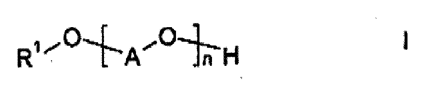 dans laquelle les variables sont définies de la manière suivante :
R¹ est choisi parmi les alkyles en C₁-C₄,
les A sont identiques ou différents et sont choisis parmi les alkylènes en C₂-C₆,
n se situe dans la plage allant de 4 à 40, et
(d) éventuellement au moins un autre composé contenant au moins un groupe COOH ou au moins un groupe OH alcoolique par molécule,
l'alcool au moins trifonctionnel (b) étant choisi parmi les triols en C₃-C₈, qui sont alcoxylés avec un oxyde d'alkylène (e), l'oxyde d'alkylène (e) étant choisi parmi les oxydes d'alkylène en C₃-C₆.

13. Composé oligomère ou polymère (β') selon la revendication 12, **caractérisé en ce que** l'alcool au moins trifonctionnel (b) est choisi parmi les triols en C₃-C₈, alcoxylés avec 1 à 30 moles d'un oxyde d'alkylène en C₃-C₆ (e) par mole d'alcool au moins trifonctionnel (b).

14. Composé oligomère ou polymère (β') selon la revendication 12 ou 13, **caractérisé en ce que** jusqu'à 33 % en moles d'oxyde d'alkylène (e) est remplacé par de l'oxyde d'éthylène.

15. Copolymère (B), pouvant être obtenu par mise en réaction de
(α1) au moins un comonomère éthyléniquement insaturé contenant au moins un groupe fonctionnel choisi parmi les groupes COOH, les groupes acide sulfonique, les groupes nitrile, les groupes hydroxyalkyle et les groupes amino, ou
(α2) au moins un (co)polymère d'au moins un comonomère éthyléniquement insaturé contenant au moins un groupe fonctionnel choisi parmi les groupes COOH, les groupes acide sulfonique, les groupes nitrile, les groupes hydroxyalkyle et les groupes amino, avec
(β) au moins un composé oligomère ou polymère, pouvant être obtenu par mise en réaction de
(a) au moins un acide di- ou polycarboxylique éthyléniquement insaturé ou son anhydride ou ester, avec
(b) au moins un alcool au moins trifonctionnel, et
(c) au moins un composé de formule générale I 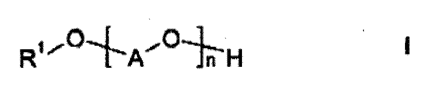 dans laquelle les variables sont définies de la manière suivante :
R¹ est choisi parmi les alkyles en C₁-C₄,
les A sont identiques ou différents et sont choisis parmi les alkylènes en C₂-C₆,
n se situe dans la plage allant de 4 à 40, et
(d) éventuellement au moins un autre composé contenant au moins un groupe COOH ou au moins un groupe OH alcoolique par molécule.

16. Copolymère (B) selon la revendication 15, **caractérisé en ce que** le comonomère éthyléniquement insaturé contenant au moins un groupe fonctionnel (α1) est choisi parmi l'acide (méth)acrylique et le (méth)acrylamide.

17. Procédé de fabrication de composés oligomères ou polymères (β') selon l'une quelconque des revendications 12 à 14, **caractérisé en ce que**
(a) au moins un acide di- ou polycarboxylique éthyléniquement insaturé ou son anhydride ou ester est mis en réaction avec
(b) au moins un alcool au moins trifonctionnel, et
(c) au moins un composé de formule générale I 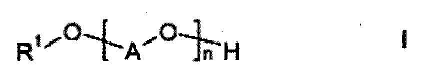 dans laquelle les variables sont définies de la manière suivante :
R¹ est choisi parmi les alkyles en C₁-C₄,
les A sont identiques ou différents et sont choisis parmi les alkylènes en C₂-C₆,
n se situe dans la plage allant de 4 à 40, et
(d) éventuellement au moins un autre composé contenant au moins un groupe COOH ou au moins un groupe OH alcoolique par molécule,
l'alcool au moins trifonctionnel (b) étant choisi parmi les triols en C₃-C₈, qui sont alcoxylés avec un oxyde d'alkylène (e), l'oxyde d'alkylène (e) étant choisi parmi les oxydes d'alkylène en C₃-C₆.

18. Utilisation de composés oligomères ou polymères (β') selon l'une quelconque des revendications 12 à 14, pour la fabrication de copolymères (B) selon la revendication 15 ou 16.

19. Procédé de fabrication de copolymères (B) selon la revendication 15 ou 16, **caractérisé en ce qu'**un (co)polymère d'au moins un comonomère éthyléniquement insaturé contenant au moins un groupe fonctionnel choisi parmi les groupes COOH, les groupes acide sulfonique, les groupes nitrile, les groupes hydroxyalkyle et les groupes amino est tout d'abord fabriqué, puis mis en réaction avec au moins un composé oligomère ou polymère (β').

20. Procédé de fabrication de copolymères (B) selon la revendication 15 ou 16, **caractérisé en ce que**
(α2) au moins un comonomère éthyléniquement insaturé contenant au moins un groupe fonctionnel choisi parmi les groupes COOH, les groupes acide sulfonique, les groupes nitrile, les groupes hydroxyalkyle et les groupes amino est polymérisé par voie radicalaire en présence de
(β) au moins un composé oligomère ou polymère.

21. Utilisation des copolymères (B) selon les revendications 15 ou 16 pour le blocage de formations souterraines lors de l'extraction de pétrole et/ou de gaz fossiles.
